# EUROPÄISCHE PATENTSCHRIFT

(11) **EP 3 344 525 B1**
(45) Veröffentlichungstag und Bekanntmachung des Hinweises auf die Patenterteilung: **27.05.2020**
(21) Anmeldenummer: 16784779.7
(22) Anmeldetag: 01.09.2016
(51) Int. Cl.: B62D 35/00

(54) **TEXTILPNEU ZUM SENKEN DES STRÖMUNGSWIDERSTANDES VON FAHRZEUGEN**
INFLATABLE TEXTILE STRUCTURE FOR LOWERING THE DRAG OF VEHICLES
STRUCTURE TEXTILE GONFLABLE DESTINÉE À RÉDUIRE LA RÉSISTANCE À L'ÉCOULEMENT DE VÉHICULES

(30) Priorität: 01.09.2015 DE 102015011422
(43) Veröffentlichungstag der Anmeldung: 11.07.2018
(73) Patentinhaber: Alpha Team GmbH, 52068 Aachen (DE)
(72) Erfinder: JABER, Abdullah, 52066 Aachen (DE); FEZAZI, Mohamed, 42103 Wuppertal (DE); ROHS, Helga, 52074 Aachen (DE); SCHLIPF, Jan, 52074 Aachen (DE); ABDELFATTAH, Basem, 80997 München (DE); MAZYEK, Mugahid, 52477 Alsdorf (DE); BUTT, Atifa, 52066 Aachen (DE)
(74) Vertreter: Patentanwälte Olbricht Buchhold Keulertz
(86) Internationale Anmeldenummer: PCT/DE2016/100401
(87) Internationale Veröffentlichungsnummer: WO 2017/036464

(56) Entgegenhaltungen:
- US-A- 5 058 945
- US-A1- 2010 181 799
- US-A1- 2012 126 572

## Beschreibung

Die Erfindung betrifft einen Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet und der Textilpneu einen befüllten Zustand und einen entleerten Zustand aufweist.

Derartige Textilpneus sind beispielsweise aus der DE 31 15 742 A1, aus der GB 2 148 207 A1, aus der US 2012/0126572 A1, aus der US 2010/0181799 A1, aus der US 6,409,252, aus der US 5,236,347, aus der US 5,058,945, aus der US 4,978,162, aus der US 4,702,509, aus der US 4,601,508, aus der US 4,236,745, aus der US 4,006,932, aus der DE 10 2008 006 365 A1 oder aus der DE 10 2012 011 971 A1 bekannt.

Hierbei gibt es einerseits starre Konstruktionen, wie sie beispielsweise in der DE 10 2008 006 365 A1 oder auch der US 4,236,745 offenbart sind. Andererseits finden sich im Stand der Technik eine Vielzahl von aufblasbarer Konstruktion, wobei ein Teil dieser Anordnungen mittels eines separaten, Druck aufbauenden und auch evakuierenden Pumpensystems arbeitet, wie beispielsweise in der GB 2 148 207 A oder der US 4,006,932 offenbart, während andere Systeme, wie insbesondere die US 6,409,252, die US 5,236,347 und die US 4,978,162 sowie diverse andere Druckschriften offenbaren, den Fahrwind für einen Druckaufbau nutzen, um dann eine Vakuumpumpe oder die natürliche Leckage für ein Entleeren zu nutzen.

Die US 5,058,945 A wird als nächstliegender Stand der Technik gegenüber dem Gegenstand des Anspruchs 1 angesehen.

Auffällig ist, dass der trotz der theoretischen und auch in Praxistests erkennbaren Vorteile hinsichtlich des Energieverbrauchs bei Fahrzeugen, insbesondere bei Nutzfahrzeugen, derartige Textilpneus am Markt nicht zu finden sind.

Es ist Aufgabe vorliegender Erfindung, einen gattungsgemäßen Textilpneu bereitzustellen, der markhinderliche Nachteile der am Markt befindlichen Textilpneus minimiert.

Die Aufgabe der Erfindung wird durch Textilpneus mit den Merkmalen des unabhängigen Anspruchs 1 gelöst. Weitere, ggf. auch unabhängig hiervon, vorteilhafte Ausgestaltungen finden sich in den Unteransprüchen sowie der nachfolgenden Beschreibung.

So können durch einen Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, eine sehr gute Formstabilität des Textilpneus und mithin sehr gute Strömungseigenschaften des Textilpneus gewährleistet werden, wenn sich der Textilpneu dadurch auszeichnet, dass im Inneren des Textilpneus ein Form haltender aber nach innen nachgiebiger Stabilisator vorgesehen ist, der zumindest ein sich mit einer zur Oberfläche des Textilpneus senkrechten Komponente erstreckendes Stabilisatorflächenelement umfasst, welches über eine Verbindungslinie mit dem Textilpneu verbunden ist.

Ein derartiges Flächenelement ist per se in sich verhältnismäßig eigensteif - und zwar in seiner Erstreckungsebene, während es ansonsten biegsam ist, sodass der Textilpneu im entleerten Zustand möglichst wenig Raum beansprucht. Dieses gewährleistet dementsprechend die Nachgiebigkeit des das Stabilisatorflächenelement umfassenden Stabilisators nach innen.

In diesem Zusammenhang sei betont, dass der Begriff "Innen" sich auf das Innere des Textilpneus bezieht, wobei das Innere je nach Betriebszustand des Textilpneus mit Luft befüllt oder weitestgehend von Luft entleert ist. Das Äußere des Textilpneus hingegen steht unter Atmosphärendruck, ggf. unter Berücksichtigung von Oberflächeneffekten, die beispielsweise im Unterschied zwischen ruhender und bewegter Luft hinsichtlich des Luftdrucks zu auch lokalen Druckschwankungen führen können, was beispielsweise zu Druckunterschieden zwischen der den Textilpneu umgebender Außenluft, welche sich zwischen dem Heck eines Nutzfahrzeugs und einer fahrzeugseitigen Rückwand befindet, und der Außenluft an der vom Fahrtwind umströmten Außenwand des Textilpneus darstellen kann.

Es versteht sich des Weiteren, dass der befüllte Zustand letztlich jeder Zustand des Textilpneus ist, in welchem der Textilpneu in für seine strömungsmindernde Aufgabe ausreichendem Zustand entfaltet ist, während der entleerte Zustand an sich einen drucklosen Zustand darstellt, in welchem der Textilpneu etwaigen Außenkräften nur durch sehr schwache Kräfte begegnen kann und an sich schlaff ist. Darüber hinaus versteht es sich, dass es zwischen diesen beiden Zuständen noch Übergangszustände gibt, da die den Textilpneu füllende Luft nicht beliebig schnell und insbesondere auch nur bis zu einem gewissen Maße aus dem Textilpneu entfernt werden kann.

Hinlänglich bekannt ist, dass Fahrzeuge, und insbesondere auch Nutzfahrzeuge, eine Vorderseite und eine Heckseite aufweisen, welche allein dadurch definiert sind, in welcher Richtung die Fahrerkabine des Fahrzeugs ausgerichtet ist. Hierbei erweist sich insbesondere bei Nutzfahrzeugen die Heckseite als strömungsmechanisch ungünstig ausgestaltet, da es häufig darauf ankommt, den zur Verfügung stehenden Laderaum zu optimieren. Genau an derartigen Heckseiten kann dann ein Textilpneu vorgesehen sein, der dementsprechend eine dem Fahrzeug zugewandte Fahrzeugseite, welche letztlich ebenfalls zur Vorderseite des Fahrzeugs weist, und eine Heckseite, die dementsprechend auch parallel zur Heckseite des Fahrzeugs ausgerichtet ist, aufweist.

Naturgemäß kann dementsprechend einem Fahrzeug, aber auch einem Textilpneu, eine Oberseite und eine Unterseite zugeordnet werden, was letztlich durch die Räder und die zugehörige Straße klar definiert ist, sodass die Unterseite zur Straße bzw. in Richtung der Räder weist, während die Oberseite von der Straße bzw. von den Rädern des Fahrzeugs weg weist. Senkrecht zu der Ebene, welche durch die Normalvektoren der Fahrzeug- bzw. Vorderseite, der Heckseite, der Oberseite und der Unterseite definiert werden kann, finden sich noch horizontale Seiten, die auch im herkömmlichen Sinne als Seiten als solche bezeichnet werden können.

Die Druckverhältnisse im Inneren des Textilpneus lassen sich insbesondere dann sehr gut beherrschen, wenn der Textilpneu sowohl eine Rückwand als auch eine Außenwand aufweist und mithin, mit Ausnahme von für den Betrieb hilfreichen bzw. sinnvollen oder notwendigen Öffnungen, wie beispielsweise Luftzu- und -abgänge, Ventilöffnungen oder ähnliches, für den befüllten Zustand notwendigen Maße komplett nach außen abgedichtet ist.

Hierbei ist die Rückwand entsprechend fahrzeugseitig ausgerichtet, während die Außenwand eine Oberseite, eine Unterseite, zwei horizontale Seiten und die Heckseite aufweist.

Vorzugsweise ist der Textilpneu luftdicht ausgebildet, wobei es sich versteht, dass aufgrund der Verwendung eines Textils, das unter Umständen auch genäht ist, durchaus eine Luftdurchlässigkeit bestehen und ggf. auch bewusst in Kauf genommen werden kann.

In vorliegendem Zusammenhang bezeichnet der Begriff "textil" Flächenelemente, die in sich eine ausreichende Flächensteifigkeit und Flächenstabilität aufweisen, während sie senkrecht zu ihrer Fläche biegsam und beweglich sind. Insbesondere umfasst der Begriff "textil" Materialien, die gewoben oder gewirkt sind. Aber auch andere eigensteife Gelege, wie beispielsweise gestrickte Strukturen, die in der Regel jedoch nicht wirtschaftlich sind, oder Gewirke bzw. sonst wie textil erstellte Gebilde, erscheinen denkbar. In vorliegendem Zusammenhang sei betont, dass jedoch auch folienartige Materialien, solange sie ausreichend den Anforderungen an ihre Eigensteifigkeit in der Fläche genügen, diesbezüglich zur Anwendung kommen können. Vornehmlich umfassen jedoch textile Gebilde, zumindest einen Kern aus Fäden oder Filamenten, die miteinander ausreichend dicht verbunden sind, wobei zwischen diesen Fäden oder Filamenten auch durchaus Zwischenräume bestehen können, die vorliegend - auch wenn es sich bei den textilen Gebilden um Gelege oder Gewirke handelt - als Maschen bezeichnet werden.

Es versteht sich, dass ggf. das entsprechende Grundgewebe oder -gewirke noch abgedichtet sein kann, um die Stabilität, die Luftdurchlässigkeit oder sonstige Eigenschaften in gewünschter Weise zu beeinflussen, was jedoch an sich hinlänglich aus dem Stand der Technik bekannt ist.

In der Regel werden die für den Textilpneu gewählten textilen Strukturen Maschen aufweisen, die wesentlich kleiner sind als der Durchmesser der Fäden oder Filamente, um auf diese Weise eine gute Stabilität und auch eine möglichst hohe Luftundurchlässigkeit schon des Grundgewebes bzw. -gewirkes zu gewährleisten. Insbesondere die Rückwand und die Außenwand des Textilpneus sind dementsprechend textil ausgebildet, wobei ggf. eine leichte Luftdurchlässigkeit durch die Maschen oder auch durch Verbindungsnähte toleriert werden kann, insbesondere wenn hierdurch möglicherweise strömungsmechanische Naheffekte, wie beispielsweise ein ruhendes Luftpolster um den Textilpneu, erwünscht wird.

Es versteht sich, dass auch das Stabilisatorflächenelement textil ausgebildet sein kann, wodurch es hinsichtlich seiner mechanischen Eigenschaften an die mechanischen Eigenschaften der Rückwand bzw. der Außenwand angepasst werden kann.

Dementsprechend ist es von Vorteil, wenn das Stabilisatorflächenelement senkrecht zu seiner Fläche beweglich ausgebildet ist, was insbesondere das Maß betrifft, in dem auch die Außenwand bzw. die Rückwand in ihrer Fläche beweglich ist, sodass das mechanische Gesamtverhalten des Textilpneus einheitlich erscheint.

Eine gute Flexibilität des Textilpneus kann gewährleistet werden, wenn die Verbindungslinie, mit welcher das Stabilisatorflächenelement oder wenigstens eines der Stabilisatorflächenelemente, wenn mehrere derartiger Stabilisatorflächenelemente zur Anwendung kommen, im Inneren des Textilpneus liegt. Dann stößt das Stabilisatorflächenelement mit einer seiner Kanten an eine in sich konsistent und eigenstabile Fläche eines entsprechenden Flächenelements der Rückwand oder der Außenwand und ist dort von innen aus mit dieser jeweils verbunden, sodass es auch entsprechend von innen stabilisierend wirkt, ohne die Beweglichkeit der Außenwand bzw. der Rückwand in Übermaß einzuschränken. Es versteht sich, dass eine derartige Ausgestaltung nicht für sämtliche der Stabilisatorflächenelemente gilt bzw. gelten muss, insbesondere hat sich dieses jedoch bei Verbindungslinien, welche eine Komponente senkrecht zur Strömungsrichtung bzw. senkrecht zur Fahrtrichtung eines entsprechenden Nutzfahrzeuges aufweisen, als vorteilhaft erwiesen. Im Ergebnis erscheint dieses insbesondere bei Verbindungslinien von Vorteil, die mit mehr als 15° bzw. mehr als 20° gegenüber der an ihnen vorbeiströmenden Strömungslinien geneigt sind.

Während die Rückwand bzw. die Außenwand des Textilpneus, um einen ausreichenden Druck im befülltem Zustand aufrechterhalten zu können, in ausreichendem Maße luftdicht ausgebildet sein sollten, ist dieses für die Stabilisatorflächenelemente in der Regel nicht notwendig, da diese im Inneren des Textilpneus angeordnet sind. Insofern ist es denkbar, hier eine andere Art Textilie zur Anwendung kommen zu lassen, was insbesondere aus Kostengründen sinnvoll erscheint, da entsprechende luftdurchlässige Materialien in der Regel wesentlich kostengünstiger sind als luftundurchlässige Materialien. Insofern können als Stabilisatorflächenelemente auch textile Flächengebilde mit größeren Maschen zur Anwendung kommen, was insbesondere die Luftdurchlässigkeit der Stabilisatorflächenelemente und mithin des Stabilisators erhöht, wodurch etwaige Kammern, welche im Inneren des Textilpneus aufgrund der Stabilisatorflächenelemente entstehen, gleichförmiger ent- und belüftet werden können. In diesem Zusammenhang versteht es sich, das Maß der Maschen insbesondere durch die notwendige Eigensteifigkeit in der Fläche der jeweiligen Stabilisatorflächenelemente begrenzt ist.

Letzteres kann ggf. der Grund dafür sein, dass eine ausreichend gleichförmige Be- und Entlüftung von Kammern, die durch das Stabilisatorflächenelement gebildet sind, nicht gewährleistet werden können. So ist es von Vorteil, wenn das Stabilisatorflächenelement wenigstens ein Loch aufweist. Durch ein derartiges Loch bzw. durch mehrere derartiger Löcher kann dann ausreichender Luftaustausch gewährleistet werden. Naturgemäß reicht ein derartiges Loch nicht bis zu einer Kante des jeweiligen Stabilisatorflächenelements, sodass trotz etwaiger Löcher an sich eine durchgehende Verbindungslinie mit der Außenwand und/oder der Rückwand gewährleistet werden kann. Ausnahmen von der Durchgängigkeit können in gewissen Ecken und Kanten zu finden sein, wenn hier Krümmungsradien eine durchgehende Verbindungslinie verhindern. Hierbei ist es vorteilhaft, wenn derartige Unterbrechungen in der Verbindungslinie kleiner als der Radius der Löcher sind, da dann davon auszugehen ist, dass der Einfluss auf die Eigensteifigkeit der Stabilisatorflächenelemente im Wesentlichen durch das Loch bzw. die Löcher und nicht durch kleinere baulich notwendige Unterbrechungen der Verbindungslinie bestimmt wird.

Die Größe und Anordnung des Lochs bzw. der Löcher wird derart gewählt, dass entlang der Fläche des Flächenelements ausreichend stabile Spannungslinien um das Loch bzw. die Löcher verbleiben, sodass das Stabilisatorflächenelement in seiner Fläche nach wie vor ausreichend eigensteif verbleibt. Ggf. kann auch der Rand der Löcher noch ein wenig verstärkt werden, damit die Spannungslinien in ausreichendem Maße um die Löcher bzw. das Loch herum geleitet werden können.

Beim Zusammenfallen des Textilpneus können unter Umständen jedoch auch derartige Löcher durch andere Flächenelemente oder auch durch das Flächenelement, welches das Loch aufweist und welches in irgendeiner Weise gefaltet ist, abgedeckt werden, wodurch eine ausreichende Be- und Entlüftung möglicherweise nicht mehr gewährleistet werden kann. Um dieses zu vermeiden, ist es von Vorteil, wenn im Inneren des Textilpneus wenigstens ein Öffnungen in den Textilpneu hinein aufweisender Luftkanal angeordnet ist, sodass auch durch die Zahl der Öffnungen, welche der Luftkanal bereitstellt und durch den sicheren Luftstrom, der durch den Luftkanal möglich ist, die Be- und Entlüftung optimiert werden kann.

In diesem Zusammenhang versteht es sich, dass auch unabhängig von den übrigen Merkmalen vorliegender Erfindung eine gute Be- und Entlüftung insbesondere auch in allen Betriebszuständen des Fahrzeugs, wie beispielsweise im Fall einer Notbremsung bei einer Schnellentlüftung, durch einen Textilpneu zum Senken des Strömungswiderstandes von Fahrzeugen mit einer Fahrzeugseite und einer Heckseite, wobei an einer Fahrzeugseite eine Haltevorrichtung zur Befestigung des Textilpneus an einem Fahrzeug angeordnet ist und der Textilpneu einen befüllten Zustand und einen entleerten Zustand aufweist, gewährleistet werden kann, wenn sich der Textilpneu dadurch auszeichnet, dass in seinem Inneren wenigstens ein Öffnungen in den Textilpneu aufweisender Luftkanal angeordnet ist.

Ein derartiger Luftkanal kann insbesondere einen Austausch zwischen etwaigen Luftkammern innerhalb des Textilpneus gewährleisten. Er kann jedoch, je nach konkreten Erfordernissen, ggf. unmittelbar an eine Be- und/oder Entlüftung angeschlossen sein und somit auch der Gesamtbe- und -entlüftung dienen. Es versteht sich, dass auf konstruktiv einfache Weise auch mehrere Luftkanäle vorgesehen sein können, die getrennt zu beaufschlagen sind, um so bestimmte Kammern bevorzugt be- oder entlüften zu können.

Vorzugsweise ist der Luftkanal durch einen Luftschlauch ausgebildet, da ein derartiger Schlauch eine gewisse Eigenbeweglichkeit aufweist, was die Grundeigenschaften eines Textilpneus, der in entleertem Zustand in sich zusammengefallen sein soll, entgegen kommt.

Insbesondere ist es von Vorteil, wenn der Luftschlauch eigenstabil ist, sodass auch bei einem Zusammenfallen ein in dem Luftschlauch befindlicher Luftkanal nicht beeinträchtigt wird.

Es versteht sich, dass statt eines Luftschlauchs auch Rohre, die möglicherweise beweglich miteinander verbunden sind, oder andere komplexere Strukturen, wie u-förmige Schienen oder ähnliches zur Ausbildung eines Luftkanals genutzt werden können.

Besonders bevorzugt ist ein perforierter Luftschlauch, weil dieser, auch wenn möglicherweise ein Teil der Öffnungen durch irgendwelches Material des Textilpneus abgedeckt sein sollte, aufgrund seiner Vielzahl an Öffnungen eine gleichförmige Be- und Entlüftung gewährleistet.

Das wenigstens eine Stabilisatorflächenelement kann an seiner Verbindungslinie an die Rückwand bzw. an die Außenwand des Textilpneus stoßen, um auf diese Weise entsprechend formstabil wirksam zu sein. Hierbei versteht es sich, dass an der Stoßkante eine Naht oder ergänzende Übergangs- bzw. Verbindungselemente vorgesehen sein können, um hier eine ausreichend stabile Verbindung zu gewährleisten.

Vorzugsweise stößt das Stabilisatorflächenelement mit einer senkrechten Komponente an die Rückwand und/oder an die Außenwand des Textilpneus, sodass sich die stabilisierende Wirkung besonders effektiv ausprägen kann.

Wenn die Rückwand bzw. die Außenwand ebenfalls durch textile Flächenelemente, vorliegend Pneuflächenelemente genannt, dargestellt ist, kann das Stabilisatorflächenelement mit zwei der die Rückwand oder die Außenwand darstellenden Pneuflächenelementen verbunden sein. Auf diese Weise wirkt es insbesondere stabilisierend, da es zwischen diesen beiden Pneuflächenelementen die gewünschte Form erzwingen kann. Selbiges gilt, wenn die Außenwand durch wenigstens zwei Pneuflächenelemente dargestellt ist, für ein Stabilisatorflächenelement, welches mit beiden dieser Pneuflächenelemente verbunden ist.

Eine besonders stabile Ausgestaltung folgt, wenn das wenigstens eine Stabilisatorflächenelement zumindest mit der Rückwand sowie wenigstens an wenigstens zwei seiner Kanten mit der Außenwand verbunden ist. Dieses bedingt, dass insbesondere auch die Rückwand stabil entsprechend gewünschter Vorgaben ausgeformt werden kann. Auch bedingt dieses, dass die Gesamtanordnung insgesamt verhältnismäßig stabil verbleibt, insbesondere auch wenn von innen Druck aufgebaut wird, also der Textilpneu in befülltem Zustand befindlich ist, bzw. wenn der Textilpneu von Fahrtwind umströmt ist.

Eine besonders stabile Ausgestaltung folgt, wenn das Stabilisatorflächenelement an zumindest drei seiner Kanten mit der Außenwand und an seiner vierten Kante mit der Rückwand verbunden ist, sodass es rundum formgebend wirken kann.

Hieraus folgt unmittelbar, dass das Stabilisatorflächenelement ggf. das Innere des Textilpneus teilt, wodurch die vorstehend bereits andiskutierten Kammern entstehen können.

Es versteht sich, dass ggf. ein Stabilisatorflächenelement aus mehreren Teilflächenelementen zusammengesetzt sein kann, was insbesondere dann von Vorteil ist, wenn sich zwei Stabilisatorflächenelemente kreuzen, wobei dann eines dieser Stabilisatorflächenelemente an der Kreuzungslinie geteilt ist, während das zweite dieser Stabilisatorflächenelemente dann an der Kreuzungslinie vorzugsweise, insbesondere aus Stabilitätsgründen, durchgängig ausgebildet sein sollte, wobei es ggf. ebenfalls an der Kreuzungslinie geteilt sein kann. Über eine Verbindung, die vorzugsweise linienförmig ausgebildet ist kann ein Zusammensetzen der Teilflächenelemente zu den jeweiligen Stabilisatorflächenelementen erfolgen.

Eine derartige Kreuzung kann insbesondere bei der Verwendung eines Zentralelementes als Stabilisatorflächenelement, welches dem Pneu in vertikaler Richtung teilt, vorteilhaft zur Anwendung kommen, wobei dann insbesondere entweder das Zentralelement oder aber das kreuzende Stabilisatorflächenelement geteilt und über die Verbindung wieder zusammengesetzt sein kann.

Gerade dann lassen sich sowohl das Zentralelement als eines der Stabilisatorflächenelemente sowie das Stabilisatorflächenelement, welches das Zentralelement kreuzt, ohne weiteres derart ausgestalten, dass diese an drei ihrer Kanten jeweils mit der Außenwand und an der vierten Kante mit der Rückwand verbunden sind.

Die entsprechenden Verbindungslinien sind vorzugsweise durchgängig, um auf diese Weise, wie bereits vorstehend angedeutet, eine möglichst gute Spannungsverteilung und sehr hohe des Stabilisators zu gewährleisten.

Vorzugsweise steht das Stabilisatorflächenelement im befüllten Zustand unter stetiger Spannung, sodass es den in aufgebrachten Kräften besonders stabil wiederstehen kann. Bei einer stetigen Spannung erfolgen keine abrupten Änderungen der Spannungslinien in dem jeweiligen Stabilisatorflächenelement, sodass das jeweils Stabilisatorflächenelement entsprechend stabil den ihn ausgeübten Kräften wiederstehen kann. Insbesondere unterliegt ein derartiges Stabilisatorflächenelement somit keinen Unstetigkeiten in der Spannung, wie sie beispielsweise durch punktuelle Belastungen oder Knicke auftreten.

Das Stabilisatorflächenelement verbleibt in sich besonders eigensteif und kann mithin verhältnismäßig große Kräfte aufnehmen, wenn es lediglich an seinen Katen mit anderen Stabilisatorflächenelementen oder mit Pneuflächenelementen verbunden ist. Dieses gewährleistet, dass Belastungen, die senkrecht zu der Fläche des Stabilisatorflächenelements wirken, auf ein Minimum reduziert werden können. Sollte eine Verbindung jedoch auch in der Fläche erfolgen, so ist es von Vorteil, wenn an dieser Linie nicht nur eine sondern zwei, jeweils auf gegenüberliegenden Flächenseiten des jeweiligen Stabilisatorflächenelements angeordnete Verbindungen mit zwei weiteren Flächenelementen vorliegen, sodass sich die Kräfte der beiden Flächenelemente einander kompensieren - und zwar hinsichtlich ihrer Komponenten senkrecht zur Ebene des entsprechenden Stabilisatorflächenelements, welches in seiner Fläche mit anderen Flächenelementen in Verbindung steht. Dieses kann insbesondere im Zusammenspiel mit der Verwendung eines Zentralelementes von Vorteil sein.

Wie bereits vorstehend dargelegt, kann durch den inneren Stabilisator bei geeigneter Ausgestaltung der zugehörigen Stabilisatorflächenelemente, wobei hier insbesondere deren Länge in Bezug auf die Rückwand und auch deren formgebende Wirkung hinsichtlich der Rückwand eine Rolle spielt, sichergestellt sein, dass die Rückwand, wenn der Textilpneu befüllt ist, keine unnötigen Kräfte auf das Fahrzeugheck ausübt, was insbesondere dann geschehen kann, wenn die Rückwand ebenfalls mit dem Innendruck des Textilpneus beaufschlagt ist. Insbesondere kann durch die nach innen, also von dem Fahrzeugheck wegweisend gewölbte Rückwand sichergestellt werden, dass auch kleinere Strukturen am Heck des Fahrzeugs, wie Armaturen oder Türgriffe oder ähnliches, frei bzw. weitgehend unbelastet verbleiben und keine Kräfte auf den Textilpneu ausüben, wenn der Textilpneu an seiner Fahrzeugseite eine textile, in gefüllten Zustand nach innen gewölbte Rückwand aufweist.

An sich ist es von Vorteil, wenn diese Wölbung möglichst groß ist, da dieses einer Verkleinerung des gesamten Fassungsvolumens des Textilpneus dient, was wiederum eine schnellere Belüftung bzw. Entlüftung ermöglicht. Andererseits kann eine zu tiefe Auswölbung der Rückwand die Gesamtstabilität des Textilpneus, insbesondere auch bei Anwesenheit bzw. trotz eines in ihm angeordneten Stabilisators verringern, sodass die Tiefe der Wölbung nicht allzu groß gewählt werden sollte. Derartige Instabilitäten können insbesondere dadurch entstehen, dass der Stabilisator an der Rückwand dann nur in ungünstigeren Winkeln angreifen kann.

In der Praxis hat sich herausgestellt, dass eine Wölbung größer 5% der Länge des Textilpneus zwischen Fahrzeugseite und Heckseite im befüllten Zustand vorteilhaft sein kann. Insbesondere wenn kürzere Textilpneus zur Anwendung kommen, die jedoch auch geringeren Seitenkräften unterliegen, können auch Werte bis zu 20% diesbezüglich zur Anwendung kommen.

Andererseits ist es von Vorteil, wenn der Textilpneu im Bereich des Übergangs zwischen dem Fahrzeugheck und der Außenwandung möglichst nahtlos in das Fahrzeugheck übergeht, schon um eine möglichst ungestörte Überführung der an den Seitenflächen und dem Fahrzeugdach vorbeiströmenden Luftmassen zum Textilpneu zu gewährleisten. Hierzu ist es von Vorteil, wenn die Rückwand ausreichend eigenstabil entsprechende Kräfte aufnehmen kann, da ansonsten die entsprechenden Kräfte ausschließlich über die verbindende Struktur zum Fahrzeugheck aufgebracht werden müssen und somit auch die textilen Strukturen am Übergang zu der verbindenden Struktur belastet werden, was nur sehr schwer von textilen Materialien insbesondere über die benötigte Betriebsdauer gewährleistet werden kann. Insofern ist es von Vorteil, wenn der Textilpneu an seiner Fahrzeugseite eine textile, einen stabilisierten Außenring umfassende Rückwand aufweist. Insoweit kann der Außenring dann etwaige Quer- und/oder Zugkräfte zumindest bis zu einem gewissen Grade aufnehmen und kompensieren, bevor diese in die verbindenden Strukturen zum Fahrzeugheck gelangen.

Dementsprechend ist ein Textilpneu zum Senken des Strömungswiederstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu in einen befüllten Zustand und einen entleerten Zustand aufweist, auch unabhängig von den übrigen Merkmalen vorliegender Erfindung vorteilhaft, wenn sich der Textilpneu an seiner Fahrzeugseite durch eine textile, einen stabilisierten Außenring umfassende Rückwand auszeichnet.

Hierbei kann dann die Tiefe der zuvor beschriebene Wölbung der Rückwand vorzugsweise zwischen der Hälfte und dem doppelten der Breite des Außenrings ausgestaltet werden, was sich aus Stabilitätsgründen sowie aus den bereits vorstehend genannten Gründen als vorteilhaft erweist.

Vorzugsweise ist der Außenring flächig mit der Rückwand verbunden bzw. in die Rückwand eingearbeitet, um entsprechend flächig. mit der Rückwand wechselwirken zu können. Bei entsprechender Ausgestaltung kann auch eine flächige Wechselwirkung mit der Außenwand realisiert werden, was dementsprechend vorteilhaft stabilisierend wirkt bzw. eine gute Verbindung gewährleistet. Dementsprechend kann der Außenring auch flächig mit der Außenwand verbunden bzw. in die Außenwand eingearbeitet sein.

Der Außenring kann beispielsweise aus Nylongewebe oder Stahlgewebe gebildet sein, was in sich noch eine gewisse Biegsamkeit aufweist, sodass der Textilpneu als Ganzes seinen textilen Charakter in gewisser Weise behält und beispielsweise noch zusammengefaltet oder um Kanten gezogen werden kann, wie dieses beispielsweise dann vorteilhaft ist, wenn das Heck des Fahrzeugs zu Ladezwecken oder aus ähnlichen Gründen frei zugänglich sein soll. Es ist dann möglich, den Textilpneu beispielsweise zur Seite zu falten oder auch um eine Kante des Fahrzeugs herum zu schieben.

Dementsprechend ist es von Vorteil, wenn der Außenring biegsam ausgebildet ist.

Auch kann sich, auch unabhängig von den übrigen Merkmalen vorliegender Erfindung, ein Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, dadurch auszeichnen, dass an einer Unterseite des Textilpneus ein Auslassventil vorgesehen ist.

Hierbei sind an sich Ventile beim Textilpneu insbesondere zum Befüllen und zum Entleeren hinlänglich bekannt und auch technisch zu erwarten. Da diese jedoch in der Regel zu Wartungsarbeiten, wie beispielsweise dem Anschluss von Druckschläuchen oder zum manuellen Ablassen von Luft, zugänglich sein müssen bzw. an den horizontalen Seiten oder der Oberseite des Fahrzeugs Luft aufnehmen sollen, um diese in das Innere des Textilpneus zu leiten, finden sich Ventile - und insbesondere Auslassventile - an der Unterseite von Textilpneus bis dato nicht.

Das an der Unterseite des Textilpneus vorgesehene Auslassventil ermöglicht es andererseits erstmals, etwaige Ansammlungen unerwünschter Stoffe innerhalb des Textilpneus über das Auslassventil einfach aus dem Textilpneu zu entfernen.

Selbst bei einem maschinellen Befüllen des Textilpneus mit Druckluft, insbesondere aber wenn der Textilpneu über den Fahrtwind befüllt wird, gelangen Schmutzpartikel, Wasser, Kondensat und insbesondere auch Organismen in das Innere des Textilpneus, was über Lang zu einer übermäßigen Verschmutzung führt, die bis dato sehr aufwendig beseitigt werden muss. Über das Auslassventil können unerwünschte Materialien im Inneren des Textilpneus einfach entfernt werden, was insbesondere für Wasser gilt, welches sich als Kondensat oder auch über den Eintrag durch den Fahrtwind in dem Textilpneu ansammelt und nach kürzester Zeit auch als Nährquelle für Mikroorganismen dient. Kann eine derartige Ansammlung von Wasser vermieden werden, so lassen sich aufwendige Reinigungsarbeiten bzw. zu kurze Lebensdauer des Textilpneus vermeiden.

Vorzugsweise ist das Auslassventil an der tiefsten Stelle der Unterseite des Textilpneus im befüllten Zustand vorgesehen, sodass die unerwünschten Stoffe schwerkraftbedingt oder auch ggf. durch die Schwerkraft unterstützt durch einen aus dem Textilpneu entweichenden Luftstrom ausgetragen werden können. Hierbei versteht es sich, dass ein kleiner Überstand, wie beispielsweise eine Naht um das entsprechende Auslassventil herum oder auch kleinere Volumina die ggf. noch tiefer liegen, durchaus in Kauf genommen werden können, solange sich dort lediglich kleinste Flüssigkeitsmengen ansammeln können, die in der Menge unerheblich sind oder dann beispielsweise an wärmeren Tagen verdampft oder aber durch die natürlichen Bewegungen des Textilpneus während der Fahrt bzw. während der Übergänge zwischen dem befüllten Zustand und dem entleerten Zustand oder bei ähnlichen Bewegungsvorgängen aus derartigen Senken ausgetrieben werden können.

Vorzugsweise ist das Auslassventil passivisch ausgebildet, was dazu führt, dass es sich letztlich selbst öffnet, wenn Entleerungsvorgänge stattfinden sollen und schließt, wenn dieses aus sonstigen Gründen sinnvoll erscheint. Auf diese Weise können aufwendige Ansteuervorgänge sowie hierzu notwendige Aggregate eingespart werden.

So kann das Auslassventil in Form eines Rückschlagventils ausgebildet sein, welches bei Überdruck nach außen hin öffnet, sodass das Auslassventil bei befüllten Textilpneu offen ist und etwaige störende Stoffe diesen ohne weiteres verlassen können. Ein hierdurch bedingter Leckstrom kann auf eine verhältnismäßig kleine Größe begrenzt werden, da das Auslassventil letztlich während der Fahrt ständig geöffnet bleiben kann und somit alleine über die Zeitdauer der Öffnung eine ausreichende Menge an unerwünschten Material abgeführt werden kann.

Darüber hinaus ist davon auszugehen, dass eine gewisse Leckage des Textilpneus insgesamt ohnehin vorliegt, beispielsweise durch kleinste Löcher bei kleineren Beschädigungen oder aber auch durch Nahtstellen hindurch geschehen kann, so dass es ohnehin von Vorteil ist, das System der ihm zugeführte Luftmenge entsprechend großzügig auszulegen, was dementsprechend dann eine Inkaufnahme eines entsprechenden Leckstroms ermöglicht.

Soll andererseits der Textilpneu schnell entleert werden, was insbesondere bei starken Bremsvorgängen oder in anderen Betriebszuständen, beispielsweise im Falle eines Kontakts am Heck des Textilpneus mit einem Fremdkörper, wie einem anderen Fahrzeug oder einer Wand, notwendig sein kann, so schließt ein Rückschlagventil bei einem absaugend wirksamen Unterdruck automatisch und ermöglicht den Aufbau eines verhältnismäßig starken Unterdrucks, welcher den Textilpneu rasch zusammenfallen lässt.

Ebenfalls passivisch lässt sich beispielsweise aber auch ein gewichtgesteuertes Ventil als Auslassventil ansetzen, welches öffnet, falls ein auf ihm lastendes Gewicht durch Schmutz, Wasser oder ähnliches unter Berücksichtigung des im Inneren des Textilpneus herrschenden Innendrucks, der ggf. über eine Kompensationsleitung zu dem Ventil auch kompensiert werden kann, öffnet. Ist die auf dem Ventil lastende Masse in ausreichendem Maße reduziert, schließt das Ventil dann wieder.

Baulich besonders einfach lässt sich das Auslassventil durch einen implodierbaren Schlauch darstellen, welcher bei Überdruck offen ist und sich bei Unterdruck zusammenzieht und somit die Öffnung verschließt.

Die vorstehend bereits erwähnte Haltevorrichtung dient der Befestigung des Textilpneus an einem Fahrzeug. Während mithin der Textilpneu an sich in einem gewissen Rahmen beweglich und faltbar ist, stellt die Haltevorrichtung im Wesentlichen starre Baugruppen bereit, die fest aber möglicherweise lösbar mit dem Fahrzeug verbunden sind, um eine betriebssichere Befestigung zu gewährleisten. Hierbei versteht es sich, dass bestimmte Baugruppen der Haltevorrichtung auch unlösbar mit dem Fahrzeug verbunden oder aber in dieses integriert sein können.

Zwar sind auch Nutzfahrzeuge denkbar, bei denen ein Zugang zum Heck nicht zwingend notwendig ist, wie beispielsweise bei Fahrzeugen, die von oben oder von der Seite be- oder entladen werden. Wenn jedoch Zugang zum Heck des Fahrzeugs bzw. auch zu einem Fahrzeugkoffer des Fahrzeugs ermöglicht werden soll, ist es von Vorteil, wenn der Textilpneu entfernbar und mithin die Haltevorrichtung lösbar ist.

Andererseits erweist es sich als verhältnismäßig aufwendig, jeweils für etwaige Ladevorgänge, die über das Heck eines Fahrzeugs stattfinden, den Textilpneu vom Heck in Gänze zu lösen, sodass aus dem Stand der Technik bereits Klapp- oder Faltmöglichkeiten für derartige Textilpneus bekannt sind.

Eine wenig raumgreifende Möglichkeit, den Zugang zum Heck eines Fahrzeugs zu gewährleisten, ermöglicht auch unabhängig von den übrigen Merkmalen vorliegender Erfindung ein Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, wenn sich der Textilpneu dadurch auszeichnet, dass die Haltevorrichtung eine fahrzeugseitige feststehende Halteeinrichtung und eine textilpneuseitige verschiebbare Schiebeführung umfasst.

Der Textilpneu kann dann über die Schiebführung entlang der Halteeinrichtung und mithin auch entlang der Heckseite des Fahrzeugs verschoben werden, um auf diese Weise einen Zugang zum Heck zu erlangen oder aber den Textilpneu wieder betriebssicher zurück in seine Position am Heck zu verbringen.

Vorzugsweise ist die Schiebeführung nach oben verschiebbar, da dann der Textilpneu weitere Tätigkeiten im Bereich des Fahrzeughecks nicht behindert, da derartige Tätigkeiten in der Regel gerade nicht an der Oberseite des Fahrzeugs sondern allenfalls an den horizontalen Seiten und natürlich am Heck stattfinden. Andererseits ist der Textilpneu währen der Fahrt am Heck vorgesehen, sodass eine etwaige Erhöhung des Fahrzeugquerschnittes unkritisch ist, da ein zur Seite geschobener Textilpneu lediglich beim Fahrzeugstillstand vorliegen wird.

Als Schiebeführung kann beispielsweise eine Kulissenführung genutzt werden, bei welchen Kulissensteine oder Kulissenräder in einer Führung laufen. Eine derartige Kulissenführung kann verhältnismäßig steif ausgebildet werden und auch verhältnismäßig hohe Kräfte aufnehmen, sodass auf diese Weise der Textilpneu betriebssicher während der Fahrt in seiner Position gehalten werden kann.

Selbiges ist auch über eine Kederführung möglich, die dementsprechend als Schiebeführung zur Anwendung kommen kann.

Insbesondere kann die Kederführung halteeinrichtungsseitig zwei um die Breite der Fahrzeugseite voneinander beabstandete und über die Höhe der Fahrzeugseite reichende erste Kederschienen und textilpneuseitig zwei zumindest in gefüllten Zustand des Textilpneus in den ersten Kederschienen angeordnete Kedern aufweisen. Dieses bedingt, dass der Textilpneu über seine gesamte Fahrzeugseite entsprechend stabil gehalten ist, wenn er in seiner für die Fahrt einzunehmenden Position befindlich ist.

Die Ausrichtung der beiden Kederschienen bedingt, dass der Textilpneu dann nach oben oder nach unten verschoben werden kann, wobei insbesondere, wie vorstehend bereits erwähnt, ein Verschieben nach oben vorteilhaft ist.

Alternativ hierzu kann die Kederführung halteeinrichtungsseitig zwei um die Höhe der Fahrzeugseite voneinander beabstandete und über die Breite der Fahrzeugseite reichende erste Kederschienen aufweisen, in welchen im befüllten Zustand des Textilpneus zwei Kedern angeordnet sind, was dann dementsprechend ein Verschieben zur horizontalen Seite ermöglicht.

Mithin sind die beiden Kederschienen vorzugsweise in einer ersten Ebene ausgerichtet, die parallel zur Fahrzeugseite liegt.

Die Kederführung kann nunmehr zwei zweite Kederschienen aufweisen, die in einer zweiten, zu der ersten Ebene abgewinkelten Ebene angeordnet sind, wobei jeweils eine der zweiten Kederschienen jeweils einer ersten Kederschiene und der zugehörigen Keder zugeordnet ist und die Keder von der ersten Kederschiene in die zweite Kederschiene und zurück laufen kann. Eine derartige Ausgestaltung ermöglicht es, dass der Textilpneu zum Freilegen der Heckseite des Fahrzeugs in eine Position an einer horizontalen Seite des Fahrzeugs oder an der Oberseite des Fahrzeugs betriebssicher verschoben werden kann, sodass der Textilpneu auch bei freigelegtem Fahrzeugheck betriebssicher am Fahrzeug verbleibt, was insbesondere Beschädigungen, oder auch mögliche Verluste vermeiden hilft.

Um beim Übergang von den beiden ersten Kederschienen zu den beiden zweiten Kederschienen und zurück mögliche Einfädelvorgänge auf ein Minimum zu reduzieren, können die Kederschienen beispielsweise in dem Übergang sich etwas weiter öffnen. Auch ist es möglich die Kederschienen zur Gänze zu öffnen, wenn geeignete Einführwinkel vorgesehen sind und die Keder jeweils betriebssicher von der einen Kederschiene in die andere Kederschiene überführt werden kann.

Vorzugsweise ist zwischen wenigstens einer der beiden ersten Kederschienen und der zugehörigen zweiten Kederschiene eine gebogene Kederschiene angeordnet, sodass etwaige Einfädelvorgänge zur Gänze unterbleiben können und die erste und die zweite Kederschiene jeweils gemeinsam mit der gebogenen Kederschiene jeweils eine gemeinsame Kederschiene bilden.

Um den Textilpneu und insbesondere auch eine mit dem Textilpneu verbundene Kederfahne der Kederführung zu entlasten, ist es von Vorteil, wenn die gebogene Kederschiene in Krümmungsrichtung geneigt ist. Hierbei erweisen sich Neigungswinkel von bis zu 30° als vorteilhaft. Auf diese Weise lassen sich zu große Spannungen im Übergang zwischen den beiden Kederschienen vermeiden, was dementsprechend eine Erhöhung der Lebensdauer des Textilpneus bedingt.

In der Praxis ermöglicht eine Kederfahne, welche eine Kederwulst der Kederführung umgibt und welche mit dem Textilpneu verbunden ist, eine ausreichend stabile aber auch ausreichend flexible Verbindung zwischen dem Textilpneu und der Halteeinrichtung bzw. dem Fahrzeug, wobei insbesondere auch ein möglichst nahtloser Übergang zwischen den Fahrzeugseiten und dem Textilpneu gewährleistet werden kann.

Es versteht sich, dass auch andere Schiebeführungen in ähnlicher Weise aufgebaut sein können, wie beispielsweise die vorstehend beschriebenen Kulissenführungen. Auch hier können beidseits des Textilpneus jeweils Führungsschienen vorgesehen sein, die ggf. gewinkelt sind und insbesondere in dem Winkel auch geneigt sein können, sodass der Textilpneu parallel zu einer Fahrzeugseite verschoben werden kann.

Die vorstehend beschriebene Kederanordnung, umfassend wenigstens eine Kederschiene sowie, textilpneuseitig, wenigstens eine in der Kederschiene angeordnete Kederwulst, die von eine Kederfahne umgeben ist, welche letztlich die Verbindung zu dem restlichen Textilpneu schafft, ermöglicht auch unabhängig von den übrigen Merkmalen vorliegender Erfindung bei einen Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, eine sehr stabile und materialschonende Befestigung des Textilpneus an dem Fahrzeug. Dieses gilt insbesondere auch dann, wenn überhaupt keine Schiebführung vorgesehen ist.

Entsprechend vorteilhaft können auch andere Arten von Schienen, die über lange Wegstrecken eine Verbindung ermöglichen, bei einem Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, zur Anwendung kommen.

Insbesondere können die Schienen eine erste Komponente einer zweikomponentigen Halterung, wie beispielsweise eine Feder einer Nut-Feder-Verbindung oder Haken oder Ösen einer Haken-Ösen-Verbindung, tragen, um den Textilpneu mit der an der Heckseite des Fahrzeugs angeordneten zweiten Komponente der entsprechenden zweikomponentigen Halterung, also beispielsweise mit der Nut der Nut-Feder-Verbindung oder mit entsprechenden Ösen oder Haken der Haken-Ösen-Verbindung, verbinden zu können.

Auch ermöglicht auch unabhängig von den übrigen Merkmalen vorliegender Erfindung eine Haltevorrichtung eines Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, eine stabile aber auch zu Wartungs- oder sonstigen Arbeiten lösbare Befestigung des Textilpneus, wenn sich der Textilpneu dadurch auszeichnet, dass die Haltevorrichtung eine auf den Textilpneu parallel zu seiner Heckseite wirkende, eine spannende und eine entspannte Position aufweisende Spannvorrichtung umfasst. Ein derartiger Übergang von einer spannenden zu einer entspannten Position kann sehr schnell bewerkstelligt werden, um ggf. Wartungsarbeiten durchführen zu können. Andererseits ermöglicht die spannende Position eine genaue Positionierung des Textilpneus während der Fahrt.

,Die Spannvorrichtung kann insbesondere als Schnellspannvorrichtung ausgebildet sein, um die Arbeitsprozesse entsprechend beschleunigen zu können.

Insbesondere kann die Spannvorrichtung einen Spannhebel umfassen, da dieses eine einfache und betriebssichere Handhabe ermöglicht.

Weisen die Halterung und die Spannvorrichtung gemeinsame Baugruppen auf, wie dieses beispielsweise ein Spannhebel, der auch die Halterung öffnet und schließt, oder eine Halteklammer, die auch spannend wirksam ist, darstellen können, so kann die Bedienung des Textilpneus weiter vereinfacht und auch betriebssicherer ausgestaltet werden.

Um die Schiebeführung vor unnötigen Querbelastungen und vor unsachgemäßer Benutzung zu schützen, ist es von Vorteil, wenn die Schiebeführung einen Antrieb aufweist. Dieser Antrieb kann dann beispielsweise auch manuell, zum Beispiel durch das Betätigen einer Kurbel als Antrieb eines Schiebers, ausgebildet sein. Vorzugsweise ist der Antrieb jedoch motorisch, was insbesondere auch die körperliche Belastung für das entsprechende Bedienpersonal senkt.

Insbesondere kann der Antrieb beidseits des Textilpneus parallel zu der Heckseite wirksam sein, sodass ein etwaiger Verzug auf ein Minimum reduziert werden kann.

In praktischer Umsetzung kann eine derartige parallele Wirksamkeit durch verschiedenste Maßnahmen gewährleistet werden. So können beispielsweise zwei getrennte Teilantriebe vorgesehen sein, die über eine gemeinsame Stange gekoppelt sind. So kann beispielsweise ein Zahnriemen, ein Seilzug oder ähnlich an beiden Seiten des Textilpneus entsprechend wirksam vorgesehen sein, wobei dann die entsprechenden Antriebe über eine gemeinsame Welle oder ähnliches miteinander gekoppelt sein können. Auch ist es denkbar, einen umlaufenden und beide Seiten des Textilpneus mit einschließenden Gesamtzug, welcher eine überkreuzte Zugführung aufweist, vorzusehen, wodurch mit einer einzigen Antriebsstelle an beiden Seiten des Textilpneus entsprechende Schiebekräfte aufgebracht werden können.

Insbesondere kann der Antrieb zumindest zwei Antriebsmotoren umfassen, wobei jeweils einer der Antriebsmotoren jeweils an einer Seite des Textilpneus wirksam ist.

Auch hierbei können die beiden Motoren beispielsweise über eine gemeinsame Welle gekoppelt sein. Vorzugsweise sind jedoch beide Antriebsmotoren getrennt angesteuert und geregelt, wodurch insbesondere die entsprechende Fahrzeugseite, an welcher der Antrieb vorgesehen ist, entsprechend entlastet wird.

Eine besonders einfache Ansteuerung folgt, wenn einer der beiden Antriebsmotoren als Master und der andere der beiden Antriebsmotoren als Slave angesteuert ist bzw. wird. Dieses ermöglicht es, dass lediglich der als Master angesteuerte Antriebsmotor mit der Gesamtsteuerung für den Antrieb des Textilpneus verbunden sein muss, während der als Slave angesteuerte Antriebsmotor lediglich der Bewegung des als Master angesteuerten Antriebsmotors folgen braucht.

In einer konkreten Umsetzung ist es beispielsweise denkbar, zum Einlernen zunächst beide Antriebsmotoren ohne den Textilpneu deutlich unter ihrer Maximalgeschwindigkeit über ihre benötigte Amplitude zu bewegen und hierbei die Zeit, welche beide Antriebsmotoren benötigen, aufzunehmen. Die Zeit des als Master angesteuerten Antriebsmotors wird der Steuerung des als Slave angesteuerten Motors als Sollzeit vorgegeben. Eine etwaige Abweichung der Sollzeit von der Istzeit kann dann vom Steuergerät des als Slave angesteuerten Antriebsmotors durch Geschwindigkeitsanpassungen korrigiert werden. Mit diesen angepassten Werten werden dann beide Antriebsmotoren unter der Last des Textilpneus über ihre maximal benötigte Amplitude betrieben. Etwaige Zeitdifferenzen werden wiederum angepasst und gespeichert. Danach sollte ein Verfahren unter Last nahe der Maximalgeschwindigkeiten der Antriebsmotoren wiederholt werden. Etwaige Zeitdifferenzen werden entsprechend durch Anpassung der Antriebsgeschwindigkeit ein weiteres Mal korrigiert und gespeichert. Von nun an werden im Betrieb die Fahrzeiten des als Master angesteuerten Antriebsmotors und des als Slave angesteuerten Antriebsmotors stets verglichen und etwaige Abweichungen angepasst.

Zur flexiblen Anpassungen der beiden Antriebsgeschwindigkeiten ist beispielsweise eine Pulsweiten modulierte Stromversorgung zweckmäßig, um über einen Mikrocontroller die beiden Antriebsmotoren digital anzusteuern. Zur optimalen Positionsbestimmung des Textilpneus und für ein eng getaktetes Tracking können Hall-Effekt-Sensoren sinnvoll zur Anwendung kommen, die jederzeit ein Feedback an die Steuergeräte geben können und so beispielsweise eine Überwachung der Antriebsmotoren ermöglichen. Eine Anbindung der zugehörigen Steuersysteme kann beispielsweise durch einen CAN-Bus oder aber durch LAN, durch WLAN oder Bluetooth erfolgen, wobei insbesondere auch eine Verbindung zu der Fahrzeugsteuerung bzw. zu dem CAN-Bus des Fahrzeugs erfolgen kann. Die nominale Antriebsgeschwindigkeit der Antriebsmotoren sollte bei 75% der Maximalleistung liegen, sodass der als Slave angesteuerte Antriebsmotor auch eine Korrektur in den oberen Leistungsbereich offenstehen hat. Entsprechende Maximalwerte sollten im nachfolgenden Zyklus allerdings wieder zum Nominalwert korrigiert werden, so dass wiederum Spielraum zur Korrektur in beide Leistungsrichtungen bleibt.

Die gegenseitige Just-in-Time Überwachung der Steuerung aber auch die klein getaktete der Echtzeitüberwachung der Antriebsmotoren kann zu einer Feinanpassung der Motorleistungen der Antriebsmotoren genutzt werden, um Lastschwankungen und unerwünschte Vibrationen im System zu kompensieren. Zeitweise erhöhte Reibbeiwerte des Textilpneus, beispielsweise beim Übergang von den ersten Kederschienen zu den zweiten Kederschienen und zurück und Widerstandsspitzen im System können so von der Steuerung durch Erhöhen der jeweiligen Antriebsleistung kurzfristig kompensiert werden, um einen geschmeidigen Synchronantrieb zu gewährleisten. Die Feinüberwachung kann als Sicherheitsmerkmal bei einer Überschreitung eines Maximaldrehmoments für eine Notabschaltung genutzt werden. Zweckmäßig wäre beispielsweise auch eine turnusmäßige Nutzung der Maximaldrehmomentsabschaltung zur Bestimmung des Erreichens der beiden Endpositionen fürs Ausfahren und Einfahren des Textilpneus zu der Heckseite hin bzw. von der Heckseite weg.

Der Antrieb kann eine direktionale Wickeltrommel, ggf. auch zwei bidirektionale Wickeltrommeln, umfassen, auf welcher ein umlaufender Zug oder zwei entgegen gerichtete Züge abwechselnd aufgewickelt sind bzw. aufgewickelt werden. Dieses ermöglicht einen besonders betriebssicheren und rutschfesten Antrieb der Schiebeführung bzw. des Textilpneus.

Vorzugsweise sind die Züge bzw. der Zug selbstspannend ausgestaltet, sodass der Textilpneu in allen Betriebspositionen ausreichend betriebssicher auch entlang der Schiebeführung geführt ist.

Es versteht sich, dass eine derartige selbstspannende Ausgestaltung des Zugs bzw. der Züge auch unabhängig von der Anwendung einer bidirektionalen Wickeltrommel vorteilhaft ist, wenn derartig Züge, beispielsweise in Form von Bowdenzüge, zur Anwendung kommen.

Insbesondere können beidseits des Textilpneus parallel zu dessen Bewegungsrichtung Züge angeordnet sein, um auf diese Weise eine Bewegung des Textilpneus in beide Richtungen zu ermöglichen. Werden beidseits des Textilpneus senkrecht zur Bewegungsrichtung parallel versetzt Antriebe vorgesehen, wie dieses bereits vorstehend beschrieben ist, so ist es dementsprechend vorteilhaft, wenn sowohl beidseits in Führungsrichtung als auch an beiden geführten Seiten des Textilpneus jeweils ein Zug angeordnet ist, sodass der Textilpneu in beide Richtungen beidseits betriebssicher entlang der Schiebeführung geführt ist.

Hierbei können die Züge, welche auf einer Seite des Textilpneus in einer Ebene parallel zur Schiebeführung angeordnet sind, gemeinsam mit dem Textilpneu und ggf. auch unter Einbezug eines Antriebsschlittens oder anderer mitlaufender Baugruppen, einen umlaufenden Antriebszug darstellen, was an sich - auch im Zusammenspiel mit einer bidirektionalen Wickeltrommel - eine sichere Antriebsverbindung gewährleistet. Ggf. können auch sämtliche Züge zu einem einzigen umlaufenden Zug kombiniert werden, um auf diese Weise mit einem einzigen Antriebsaggregat zwei beidseits des Textilpneus synchron angreifende Antriebe durch ein Überkreuzen der Züge gewährleisten zu können, wie dieses beispielsweise für den Antrieb von Fensterhebern bereits bekannt ist.

Es versteht sich, dass anstelle der vorstehend beschriebenen Züge auch andere Antriebsmöglichkeiten, wie Zahnriemen und/oder Zahnstangen, zur Anwendung kommen können.

In der Praxis hat sich herausgestellt, dass es ebenso notwendig ist, den Textilpneu schnell zu entlüften, wie er betriebssicher mit Luftdruck in den befüllten Zustand gebracht werden und dort auch gehalten werden muss. Insofern schlagen, wie bereits vorstehend dargelegt, einige Anwendungen eine aktive Absaugung des Textilpneus vor.

Wenn ein Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, sich dadurch auszeichnet, dass der Textilpneu mit einer durch den Fahrtwind eines Kraftfahrzeugs angetriebenen Entlüftungseinrichtung verbunden ist, kann auf baulich einfache Weise auch unabhängig von den übrigen Merkmalen vorliegender Erfindung eine betriebssichere Entlüftung zu den notwendigen Zeitpunkten gewährleistet werden.

Im Stillstand ist ein gefüllter Textilpneu ohnehin nicht notwendig, sodass auch keine Veranlassung besteht, den befüllten Zustand bei einem Stillstand des Fahrzeug aufrecht zu erhalten. In Fahrtsituation kann jedoch, insbesondere wenn beispielsweise ein Auffahrunfall auf das Heck des mit dem Textilpneu ausgestatteten Fahrzeugs droht, ein ausreichend schnelles und betriebssicheres Entleeren notwendig sein. Durch die mittels des Fahrtwinds angetriebene Entlüftungseinrichtung kann diesem Erfordernis entsprechend auf baulich einfache und energetisch günstige Weise Rechnung getragen werden.

Aufgrund der Tatsache das bewegte Luft naturgemäß einen niedrigeren Druck als stillstehende Luft aufweist sowie aufgrund des am Heck ohnehin vorhandenen Unterdrucks kann eine Entlüftungseinrichtung auf baulich sehr einfache Weise über den Fahrtwind angetrieben werden, indem diese Unterdrucksituation gezielt zum Entlüften genutzt wird. Andererseits sind in derartig offenen Systemen, wie sie an der Außenwand des Textilpneus auftreten, die Druckunterschiede verhältnismäßig gering, sodass es von Vorteil ist, diesbezüglich verstärkend einzugreifen. Letzteres kann insbesondere durch den Einsatz einer Venturi-Düse als Entlüftungseinrichtung geschehen, durch welche gezielt ein Unterdruck erzeugt werden kann, der dann zum Entlüften bzw. Entleeren genutzt werden kann. Dementsprechend ist es von Vorteil, wenn die Entlüftungseinrichtung einen Lufteinlass, eine Venturi-Düse und einen Luftauslass umfasst. Auf diese Weise kann die Luft gezielt eingefangen und zum Aufbau eines Unterdrucks genutzt werden.

Die Venturi-Düse kann einen Ansaugraum aufweisen, der mit dem Inneren des Textilkörpers verbunden ist, sodass auf diese Weise ein Entleeren des Textilpneus ohne weiteres möglich ist.

Insbesondere kann die Entlüftungseinrichtung eine durch den Fahrtwind angetriebene Be- und Entlüftungseinrichtung sein, also sowohl der Be- als auch der Entlüftung des Textilpneus dienen.

Hierzu ist es insbesondere vorteilhaft, wenn zwischen dem Lufteinlass und dem Luftauslass eine den durch die Venturi-Düse strömenden Luftstrom wahlweise stauende Staueinrichtung vorgesehen ist. Wird diese Staueinrichtung stauend eingesetzt, so kann sich in der Venturi-Düse kein beschleunigter Luftstrom ausbilden, der ansaugend wirksam wird. Folglich findet eine Richtungsumkehr statt und die sich weiterhin stauende Luft wird durch die Venturi-Düse hindurch in den Ansaugraum gelangen. Diese in den Ansaugraum gedrückte Luft kann dann zum Befüllen des Textilpneus genutzt werden.

Sowie die Staueinrichtung entfernt bzw. als nicht mehr stauend gewählt wird, steht einer Ausbildung einer die Venturi-Düse bestimmungsgemäß schnell durchströmenden Luftströmung, welche über den Venturi-Effekt auch einen Unterdruck bereitstellt, nichts mehr im Wege, sodass die Luft aus der Ansaugkammer und mithin auch aus dem Textilpneu angesaugt werden kann.

Vorzugsweise ist die wahlweise stauende Staueinrichtung hinter der Venturi-Düse angeordnet, da dieses den entsprechenden Effekt auf baulich besonders einfache Weise realisieren lässt.

Kumulativ bzw. alternativ hierzu kann zwischen dem Lufteinlass und dem Luftauslass eine wahlweise in den Ansaugraum öffen- und schließbare Öffnung vorgesehen sein. Über diese Öffnung kann der Ansaugraum wahlweise gezielt mit Luft versorgt werden, um auf diese Weise einen Luftüberschuss bereitzustellen, der dann zum Befüllen des Textilpneus genutzt werden kann.

Wird die Öffnung geschlossen, so fällt dieser Luftüberschuss weg, sodass die Ansaugkammer sich wieder gezielt in und durch die Venturi-Düse druckmindernd entleeren kann.

Die öffen- und schließbare Öffnung kann insbesondere zwischen der Venturi-Düse und dem Luftauslass vorgesehen sein, was auch für die wahlweise stauende Staueinrichtung gilt.

In einer besonders bevorzugten Ausführungsform werden die öffen- und schließbare Öffnung sowie die stauende Staueinrichtung durch eine gemeinsame Baugruppe, beispielsweise durch eine Klappe oder ein sonstiges drei-Wege-Ventil, realisiert, die derart angeordnet ist, dass sie in einem Zustand den durch die Venturi-Düse strömenden Luftstrom möglichst unbeeinflusst durchlassen und gleichzeitig die öffen- und schließbare Öffnung verschließen, was dementsprechend dem ansaugenden bzw. entleerenden Zustand entspricht, kann, während in einer anderen Stellung der durch die Venturi-Düse strömende Luftstrom gestaut und die öffen- und schließbare Öffnung geöffnet werden, sodass dann der Luftstrom, welcher durch die Venturi-Düse strömt, einerseits durch die Venturi-Düse selbst und andererseits durch die Öffnung in den Ansaugraum gelangen kann.

Zwischen dem Lufteinlass und der Venturi-Düse kann eine Filteranordnung vorgesehen sein, um auf diese Weise ein Eindringen von Fremd- bzw. Schmutzmaterial in die Venturi-Düse und insbesondere in den Textilpneu möglichst zu vermeiden. Hierbei kann die Filteranordnung beispielsweise Filtersiebe oder ähnliches aufweisen. Ebenso ist besonders vorteilhaft, weil einfach durchlässig zu halten, eine Labyrinthanordnung denkbar. Vorzugsweise weist die Filteranordnung einen Schmutzabweiser auf, welcher gesammeltes Fremdmaterial bzw. Schmutz und insbesondere auch Wasser aus dem Filter nach außen ableitet. Dieses kann beispielsweise durch kleine Öffnungen in dem Filterbereich realisiert sein.

Die Filteranordnung dient darüber hinaus in einer vorteilhaften Weise der Reduktion etwaiger Druckfluktuationen.

Mittels durch Umlenkplatten gebildeter Filter können Schmutzpartikel aufgrund der verhältnismäßig großen Geschwindigkeitsänderungen im Bereich der Umlenkplatten aus dem Luftstrom verhältnismäßig effektiv entfernt werden, ohne diese zu sehr in seinem Volumenstrom zu beeinträchtigen.

Ebenso einer Reduktion von Druckfluktuation kann eine Rückschlagklappe dienen, welche zwischen dem Lufteinlass und der Venturi-Düse vorgesehen ist. Diese Rückschlagklappe kann je nach konkreter Ausgestaltung federbelastet oder nur gewichtsbelastet in der Nähe des Lufteinlasses angeordnet sein.

Die Rückschlagklappe kann insbesondere auch im Stillstand des Fahrzeugs ein Eindringen größerer Gegenstände oder von Unmengen an Wasser oder ähnliches verhindern.

Zur Reduktion von Turbulenzen und zur Maximierung des Staudruckes erscheint ein konischer Lufteinlass vorteilhaft.

An dem Lufteinlass können Mittel zur Regulierung des Öffnungsquerschnittes des Lufteinlasses vorgesehen sein. So kann beispielsweise, wenn der maximale Ladedruck des Textilpneus erreicht ist, der Lufteinlass teilweise geschlossen werden, um den Luftwiderstand zu senken. Hierzu ist es insbesondere von Vorteil wenn die Regulierungsmittel von unten nach oben in den Lufteinlass eingreifen und einen Teil des Luftstroms über den Lufteinlass hinweg leiten oder aber einen Teil des Luftstroms an diesem seitlich vorbei leiten, sodass ein möglicher Luftstau vor dem geschlossenen Lufteinlass bzw. vor dem teilweise geschlossenen Lufteinlass auf ein Minimum reduziert werden kann.

Als Venturi-Düse kommt jede geeignete Düsenanordnung in Frage, in welcher der Venturi-Effekt zum Tragen kommt. Als besonders bevorzugte Ausgestaltung hat sich eine Beschleunigungskammer mit einer perforierten Wandung zu der Ansaugkammer erwiesen, da diese auch über große Distanzen eine gute Strömungsführung ermöglicht, sodass in die Ansaugkammer und auch aus dieser heraus ausreichend große Luftmassen betriebssicher und schnell transportiert werden können.

Weist ein Antrieb des Textilpneus, mittels dessen dieser in irgendeiner Weise verlagerbar ist, beispielsweise um eine Heckseite des Fahrzeugs freizugeben, einen Antriebsschlitten auf, so kann dieser vorzugsweise die Entlüftungseinrichtung bzw. insbesondere die Be- und/oder Entlüftungseinrichtung tragen. Auf diese Weise verbleibt die Entlüftungseinrichtung bzw. die Be- und/oder Entlüftungseinrichtung in ihrer lokalen Position in Bezug auf den Textilpneu, wenn dieser verlagert wird, was den Einsatz von beweglichen Verbindungen zwischen dem Textilpneu und seiner Entlüftungseinrichtung bzw. Be- und/oder Entlüftungseinrichtung trotz einer Verlagerung zu vermeiden hilft.

Es versteht sich, dass ggf. die Be- und/oder Entlüftungseinrichtung auch an anderer Stelle, beispielsweise auf einem Fahrerdach, vorgesehen sein kann, wenn dann der entsprechende Luftdruck über einen Schlauch oder über ein ähnliches System zu dem Textilpneu geleitet wird.

Der Textilpneu kann eine Heizung aufweisen, damit insbesondere im Winter das Risiko von Vereisungen minimiert werden kann.

Vorzugsweise ist die Heizung in der Entlüftungseinrichtung bzw. der Be- und/oder Entlüftungseinrichtung vorgesehen, da an dieser Stelle am ehesten Vereisungsprozesse oder auch unerwünschtes Kondensat zu erwarten ist und da etwaige Luft, die dort erwärmt ist, auch genutzt werden kann, den übrigen Textilpneu zu erwärmen. Insbesondere kann die Heizung beispielsweise in oder an ohnehin vorhandenen Baugruppen, wie beispielsweise an Filterplatten oder an der Wandung der Venturi-Düse, vorgesehen sein.

Vorzugsweise ist der Textilpneu unteilbar ausgebildet, was zwar den Nachteil hat, dass er dann auch als Ganzes von der Heckseite entfernt werden muss, wenn diese freigelegt werden soll. Andererseits ermöglicht dieses eine hervorragende Stabilität des Textilpneus, was insbesondere gilt, wenn die Rückwand des Textilpneus unteilbar ausgebildet ist. Auf diese Weise kann die Rückwand in ausreichendem Maße über den vorstehend erläuterten Stabilisator bzw. über die Stabilisatorflächenelemente und insbesondere über ein etwaiges Zentralelement als Stabilisatorflächenelement stabilisierend wirken.

Andererseits kann sich auch ein geteilter Textilpneu als vorteilhaft erweisen, da dann beispielsweise auf jeder Tür einer zweiflügeligen Tür ein Teil des Textilpneus fest mit dem jeweiligen Flügel verbunden werden kann. Der geteilte Textilpneu bedingt jedoch, dass dann ggf. eine ausreichend luftdichte Verbindung zwischen den beiden Teilen geschaffen werden muss, was letztlich während normaler Ladetätigkeiten einen erheblichen Aufwand an sehr filigranen bzw. komplexen Tätigkeiten bedingen würde. Auch hinsichtlich eines etwaigen Stabilisators wären ggf. Verbindungslinien zu öffnen und zu schließen, was einen entsprechenden Aufwand bedingen würde. Unter Umständen könnte jedoch ein Zentralelement beispielsweise zweifach ausgeführt sein und zwischen diesen beiden Zentralelementen dann ein öffen- und schließbares Verbindungselement angeordnet sein. Ein derartiges Verbindungselement kann dann insbesondere an der Verbindung zwischen den beiden Zentralelemente und der Rückwand und der Außenwand bzw. den Wandungen des Textilpneus angeordnet sein und so die Teilung definieren. Es versteht sich, dass entsprechende Teilungen auch an anderen Stellen entsprechend vorgesehen sein können, wobei es dann von Vorteil ist, einander berührende Flächen von Stabilisatorflächenelementen ausreichend luftdurchlässig, beispielsweise auch durch Löcher, auszugestalten, um die Kräfteverteilung möglichst wenig ungünstig zu beeinflussen. Die Verbindungselemente sind vorzugsweise ausreichend abdichtend ausgelegt, damit etwaige Leckströme nicht zu groß werden.

Alternativ hierzu könnten zwei eigenständige Textilpneus, insbesondere jeweils mit eigenem Stabilisator an jedem der Türflügel vorgesehen sein, die jeweils eine eigene Rückwand und eine eigene Außenwand, welche das Innere des jeweiligen Textilpneus nach Außen abdichten, so dass die gesamte Außenwand und auch die Rückwand innenseitig mit den Innendruck und außenseitig mit Atmosphärendruck, ggf. um eine geschwindigkeitsbedingte Komponente reduziert, beaufschlagt sind, und innerhalb derer insbesondere auch ein Stabilisator vorgesehen sein kann. Hierbei können die Außenwände an der jeweiligen Seite, welche dem anderen der beiden Textilpneus zugewandt sind, ggf. einander berühren.

Die vorstehenden Verbindungselemente eignen sich ggf. auch insbesondere dazu, den Textilpneu schnell zu entleeren, insbesondere wenn andere Entlüftungseinrichtungen beispielsweise bei einem Unfall oder bei plötzlichem Stillstand des Fahrzeugs nicht funktionieren. Hierzu braucht das Verbindungselement lediglich geöffnet werden.

Insofern ist unabhängig von allen übrigen Merkmalen vorliegender Erfindung eine Schnellentlüftung, welche eine öffen- und schließbare Schnellentlüftungsöffnung in einer Wandung des Textilpneus umfasst, bei einem Textilpneu zum Senken des Strömungswiderstandes von Fahrzeugen mit einer Fahrzeugseite und einer Heckseite, wobei an der Fahrzeugseite eine Haltevorrichtung zur Befestigung des Textilpneus an einem Fahrzeug angeordnet ist und der Textilpneu einen befüllten Zustand und einen entleerten Zustand aufweist, entsprechend vorteilhaft.

Vorzugsweise sind die öffen- und schließbare Schnellentlüftungsöffnung oder - öffnungen bzw. das öffen- und schließbare Verbindungselement oder die öffen- und schließbaren Verbindungselemente in Reichweite von Bedienpersonal bzw. vom Boden aus erreichbar angeordnet, so dass entsprechend einfach ein manueller Zugriff möglich ist.-

Die öffen- und schließbare Schnellentlüftungsöffnung oder -öffnungen bzw. das öffen- und schließbare Verbindungselement oder die öffen- und schließbaren Verbindungselemente können insbesondere an einer Verbindungslinie zwischen Flächenelementen, wie beispielsweise zwischen Stabilisatorflächenelementen und/oder Pneuflächenelementen untereinander, vorgesehen sein. Auf diese Weise wird die Integrität des Textilpneus nur unwesentlich beeinträchtigt und es brauchen keine separaten Öffnungen oder weitere Maßnahmen vorgesehen sein.

Die öffen- und schließbare Schnellentlüftungsöffnung oder -öffnungen bzw. das öffen- und schließbare Verbindungselement oder die öffen- und schließbaren Verbindungselemente können insbesondere durch ein zweikomponentiges Verschlusssystem realisiert sein, welche sich häufig ohne Weiteres auch ausreichend luftdicht ausgestalten lassen. So bilden sich diesbezüglich beispielsweise Reißverschlüsse oder flächige Haken-Schlaufen-Verschlüsse, auch Klett®- oder Velcro®-Verschlüsse genannt, diesbezüglich an.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: ein Fahrzeug mit einem über eine Haltevorrichtung an dem Fahrzeug befestigten Textilpneu in schematischer Seitenansicht;
- Figur 2: den Textilpneu nach Fig. 1 in einer perspektivischen Höhenliniendarstellung von der Heckseite schräg oben;
- Figur 3: den Textilpneu nach Fign. 1 und 2 in einer perspektivischen Höhenliniendarstellung von der Fahrzeugseite schräg oben;
- Figur 4: ein Schnittmuster für den Textilpneu nach Fign. 1 bis 3;
- Figur 5a: die linke Seite und gestrichen die rechte Seite des Textilpneus nach Fign. 1 bis 4 in einer Explosionsansicht aus einer der Fig. 2 ähnlichen Perspektive;
- Figur 5b: die linke Seite des Textilpneus nach Fign. 1 bis 4 von innen;
- Figur 6: ein Schnittmuster für einen weiteren Textilpneu;
- Figur 7a: den Textilpneu nach Fig. 6 in ähnlicher Darstellung wie Fig. 5a;
- Figur 7b: den Textilpneu nach Fig. 6 in ähnlicher Darstellung wie Fig. 5b;
- Figur 8: ein Schnittmuster für einen weiteren Textilpneu;
- Figur 9a: den Textilpneu nach Fig. 8 in ähnlicher Darstellung wie Fign. 5a und 7a;
- Figur 9b: den Textilpneu nach Fig. 8 in ähnlicher Darstellung wie Fign. 5b und 7b;
- Figur 10: einen dem Textilpneu nach Fign. 1 bis 6 ähnlichen Textilpneu mit einem Luftkanal und Löchern sowie mit einem Auslassventil in ähnlicher Darstellung wie Fig. 6;
- Figur 11: eine perspektivische Detaildarstellung des Luftkanals nach Figur 10;
- Figur 12: das Auslassventil nach Figur 10 in geöffnetem Zustand;
- Figur 13: das Auslassventil nach Figur 10 in geschlossenem Zustand;
- Figur 14: die Haltevorrichtung nach Fig. 1 in einer schematischen und gebrochenen Seitenansicht;
- Figur 15: eine Detailvergrößerung XV einer bidirektionale Wickeltrommel aus Fig. 14 sowie eine schematische Aufsicht derselben;
- Figur 16: eine Detailvergrößerung XVI einer Kederführung aus Fig. 14;
- Figur 17: einen Schnitt durch Fig. 16;
- Figur 18: eine zu der Haltevorrichtung nach Fign. 1 und 14 alternative Haltevorrichtung in ähnlicher Darstellung wie Fig. 14;
- Figur 19: eine Detailvergrößerung XIX einer Kulissenführung aus Fig. 18;
- Figur 20: die Anordnung nach Figur 19 im Schnitt;
- Figur 21: ein Blick von der Fahrzeugseite zur Heckseite auf die Anordnung nach Fign. 19 und 20;
- Figur 22: eine Detailvergrößerung XXII einer selbstspannenden Bowdenzuganordnung nach Fign. 14 und 18;
- Figur 23: eine schematische Schnittdarstellung einer Be- und/oder Entlüftungseinrichtung in ansaugendem Zustand;
- Figur 24: die Anordnung nach Figur 23 in Druck aufbauendem Zustand;
- Figur 25: eine Schemadarstellung einer Steuerung für einen Textilpneu und seiner Haltevorrichtung;
- Figur 26: eine Komponente einer zweikomponentigen Halterung und eine Spannvorrichtung am Heck eines Fahrzeugs; und
- Figur 27: einen Schnitt bei einem durch die Halterung gehaltenem und durch die Spannvorrichtung gespanntem Textilpneu entlang der Linie XXVII-XXVII in Figur 26.

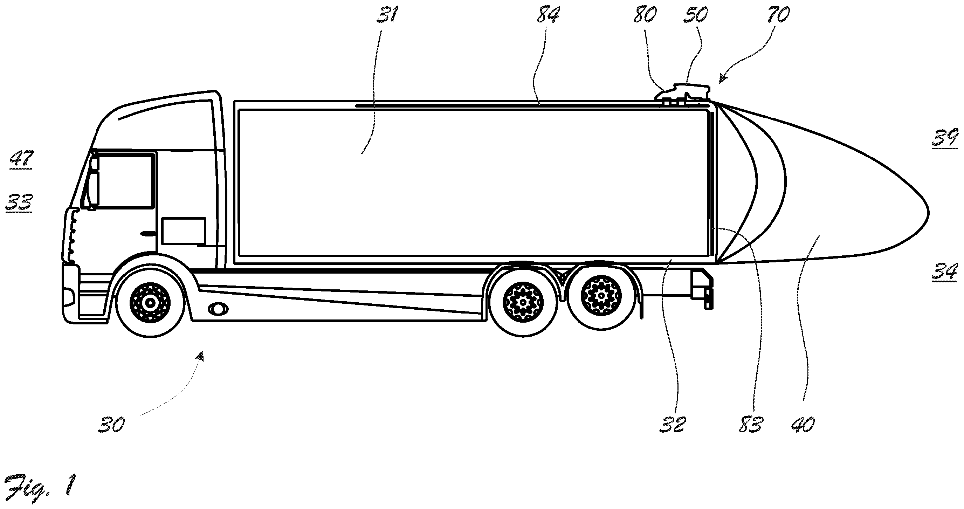

Das als Nutzfahrzeug ausgebildete und in Figur 1 dargestellte Fahrzeug 30 trägt einen Fahrzeugkoffer 31 und weist eine Rahmenkonstruktion 32 auf, an welchen ein Textilpneu 40 angebracht ist, der in einem befüllten Zustand in an sich bekannter Weise den Strömungswiderstand des Fahrzeugs 30 senken kann, wenn dieses sich in Richtung seiner Vorderseite 33 bewegt.

Das Fahrzeug 30 weist darüber hinaus eine Heckseite 34 auf, an welcher der Textilpneu 40 vorgesehen ist, welcher demnach dementsprechend eine dem Fahrzeug 30 zugewandte Fahrzeugseite 47, welche in Ihrer Ausrichtung der Vorderseite 33 des Fahrzeugs 30 entspricht, und eine Heckseite 46, welche in ihrer Ausrichtung der Heckseite 34 des Fahrzeugs 30 entspricht, aufweist.

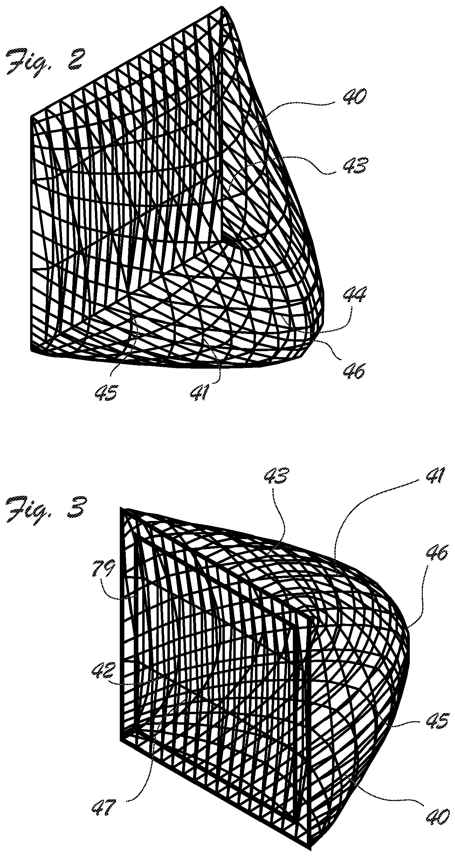

Wie insbesondere in Figuren 2 und 3 dargestellt, weist der Textilneu 40 eine Außenwand 41 und eine Rückwand 42 auf, wobei die Rückwand 42 im Wesentlichen an der Fahrzeugseite 47 des Textilpneus 40 zu finden ist, während die Außenwand 41 in Richtung der Heckseite 46 weist.

Dem Textilpneu 40 kann darüber hinaus eine Oberseite 43 und eine Unterseite 44 zugeordnet werden, die entsprechend der Oberseite und der Unterseite des Fahrzeugs 30 ausgerichtet sind, was an sich keiner näheren Erläuterungen bedarf. Selbiges gilt für zwei horizontale Seiten 45, welche entsprechend der horizontalen Seiten des Fahrzeugs ausgerichtet sind.

Hierbei zeigen Figuren 2 und 3 den Textilpneu 40 ebenfalls im befüllten Zustand, in welchem die Rückwand in Richtung der Heckseite 46 gewölbt ist, was durch Höhenlinien in den Figuren 2 und 3 dargestellt ist. Diese Wölbung entspricht in ihrer Höhe etwa 7 % der Längserstreckung des Textilpneus 40 von der Heckseite 46 zu der Fahrzeugseite 47, wobei hier auch andere Abmessungen je nach konkreter Umsetzung denkbar sind.

An der Rückwand 42 ist darüber hinaus ein Außenring 79 vorgesehen, welcher die Wölbung umgibt und den Rand des Textilpneus 40 an seiner Fahrzeugseite 47 stabilisiert.

Der Textilpneu 40 ist aus Pneuflächenelementen 1, 2 für die Rückwand 42 sowie aus Pneuflächenelementen 6, 7, 8, 9, 10, 11, 12, 13, 14 und 17 für die Außenwand 41 zusammengesetzt, wobei die Pneuflächenelemente 6, 7, 8, 9, 10 und 11 zur Darstellung einer Seitenwand, deren überwiegende Richtungskomponente parallel zur horizontalen Seite 45 ausgerichtet ist, dienen. Durch die Pneuflächenelemente 12 und 13 wird eine Oberwand mit einer überwiegenden Ausrichtung zur Oberseite 43 und durch das Pneuflächenelement 14 eine Unterwand, die im Wesentlichen parallel zur Unterseite 44 ausgerichtet ist, dargestellt. Das Pneuflächenelement 17 stellt bei den vorliegenden Ausführungsbeispielen die Heckseite dar.

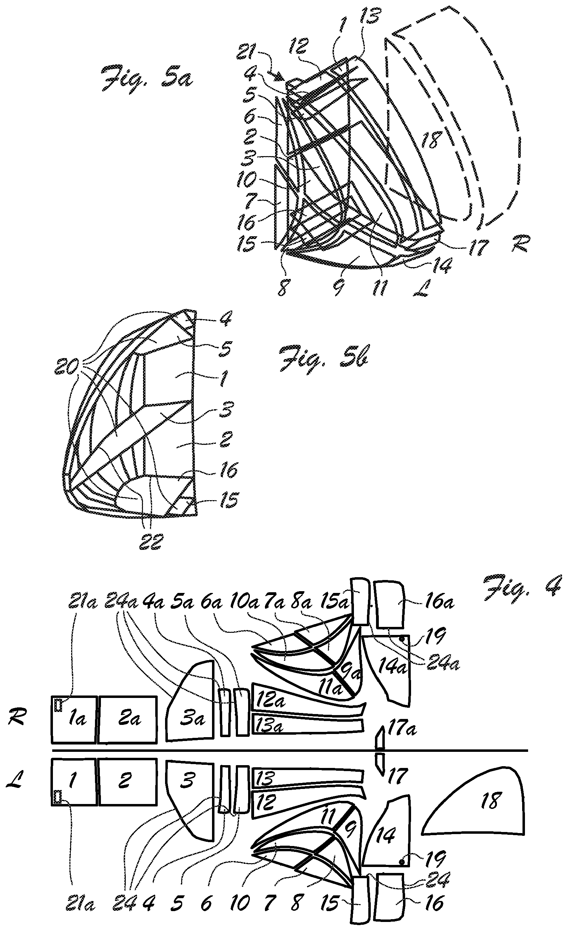

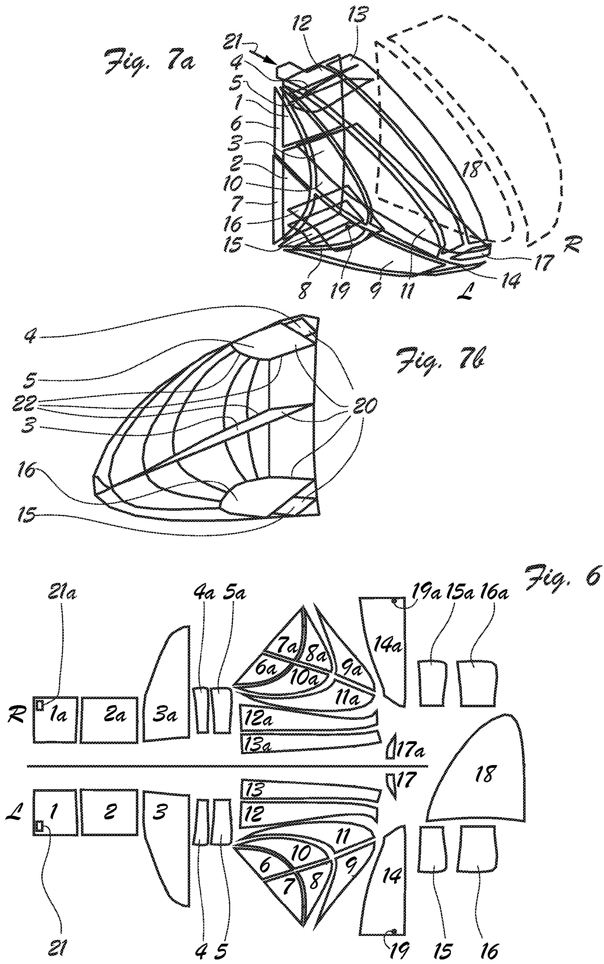

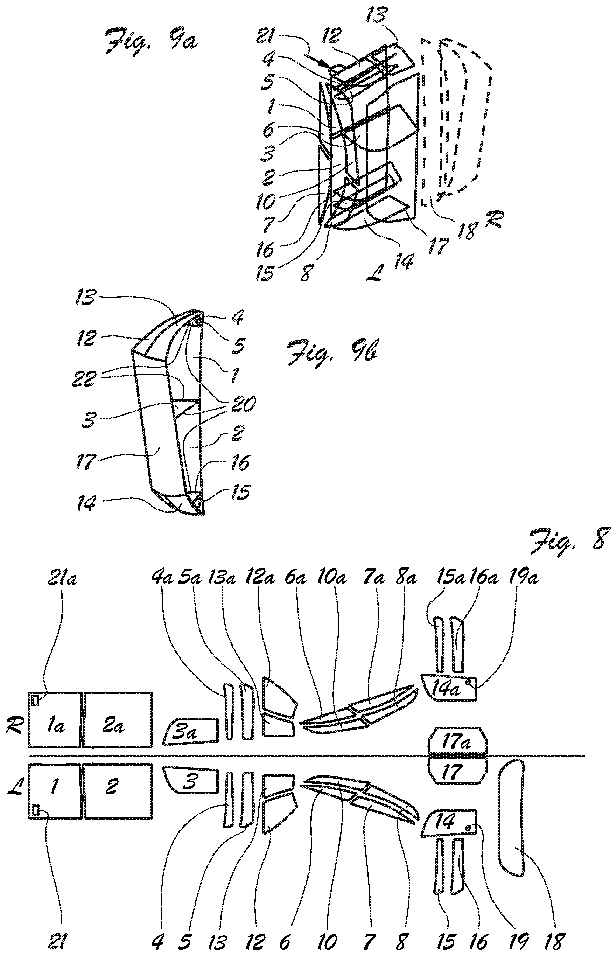

Die entsprechenden Ansätze finden sich insbesondere in den Figuren 4 und 5 sowie 6 und 7 dargestellt, wobei in Figuren 8 und 9 ein etwas kürzeres Textilpneu 40 vorgesehen ist, bei welchem auf einzelne Pneuflächenelemente verzichtet wurde und insbesondere das Pneuflächenelement 17 für die Heckseite 46 wesentlich größer ausgebildet ist.

Wie unmittelbar ersichtlich, sind die Pneuflächenelemente 6, 7, 8, 9, 10, 11, 12, 13, 14 und 17 jeweils aus textilem Material gebildet, welches im Wesentlichen luftundurchlässig gewählt ist. Darüber hinaus sind die Pneuflächenelemente 6, 7, 8, 9, 10, 11, 12, 13, 14 und 17 über Nähte miteinander verbunden.

Alternativ können statt Nähte natürlich andere Verbindungsarten, wie beispielsweise Klebelinien oder Schweißlinien dementsprechend zur Anwendung kommen.

Wie unmittelbar den Figuren 4 bis 9 entnehmbar, ist der Textilneu 40 symmetrisch aufgebaut, wobei in den Figuren 5a und 5b, 7a und 7b bzw. 9a und 9b jeweils im Wesentlichen lediglich die linke Seite (L) dargestellt ist. Die rechte Seite (R) ist lediglich in den Schnittvorlagen der Figuren 4, 6 und 8 dargestellt und in den Figuren 5a, 7a, und 9a lediglich gestrichen.

Innerhalb des Textilpneus 40 ist ein Stabilisator 20 angeordnet, der aus Stabilisatorflächenelementen 3, 4, 5, 15, 16 und 18 gebildet ist, wobei das Stabilisatorflächenelement 18 als Zentralelement dient und die rechte Seite des Textilpneus 40 von der linken Seite teilt. Das Zentralelement 18 reicht von der Rückwand 42 bis zu dem Pneuflächenelement 17 für die Heckseite 46 und ist im Übrigen sowohl mit der Oberwand als auch der Unterwand verbunden. Sollte in einer alternativen Ausführungsform an dem Fahrzeug 30 zwei gemeinsam wirksame Textilpneus 40 angeordnet werden sollen, so wäre es beispielsweise denkbar, statt des Zentralelements 18 zwei ähnlich geschnittene Pneuflächenelement anzusetzen, die jeweils dann mit der geteilten Rückwand 42 sowie der restlichen Außenwand 41 des jeweiligen Textilpneus 40 verbunden werden, um Bestandteil der Außenwand 41 des jeweiligen Textilpneus 40 zu werden. Auch dann verbleibt noch jeweils ein durch die Stabilisatorflächenelemente 3, 4, 5, 15 und 16 gebildeter Stabilisator 20 innerhalb jedes der beiden Textilpneus 40, wobei es sich versteht, dass ggf. auch noch in jeden der Textilpneus 40 dann eine ergänzendes Zentralelement 18 eingesetzt werden kann.

Auch die Stabilisatorflächenelemente 3, 4, 5, 15 und 16 sind jeweils mit der Rückwand 42 und an zumindest zwei Kanten mit der Außenwand 41 des Textilpneus 40 verbunden. Sie treffen sich an dem Zentralelement 18 jeweils mit ihren Pendants des jeweils auf der anderen Seite liegenden Teilpneus, sodass insbesondere auf das Zentralelement 18 auch symmetrische Kräfte wirken und dieses ebenfalls besonders stabilisierend wirken kann.

Die Zuschnitte der Flächenelemente insgesamt sind derart gewählt, dass die Rückwand 42 in befülltem Zustand betriebssicher eine Wölbung aufweist, wie diese bereits vorstehend erläutert wurde.

Die Stabilisatorflächenelemente 3, 4, 5, 15, 16 und 18 sind jeweils über Nähte miteinander bzw. mit der Außenwand 41 und der Rückwand 42 des Textilpneus 40 verbunden. In abweichenden Ausführungsformen können auch hier Klebe- oder Schweißverbindungen oder ähnliche Verbindungsarten zur Anwendung kommen.

Hierbei sind die Stabilisatorflächenelemente 3, 4, 5, 15, 16 und 18 derart ausgerichtet, dass sie im Wesentlichen lediglich auf Zug beansprucht sind, wobei bis auf das Zentralelement 18 sämtliche Stabilisatorflächenelemente 3, 4, 5, 15 und 16 lediglich an ihren Kanten 24 mit anderen Stabilisatorflächenelementen 18 oder der Außenwand 41 oder der Rückwand 42 verbunden.

Auf diese Weise können die Stabilisatorflächenelemente 3, 4, 5, 15 und 16 besonders stabil in ihrer Fläche auf die Außenwand 41 und die Rückwand 42 wirken. Dieses gilt auch für das Zentralelement 18, da dieses in seiner Fläche, welche über die anderen Stabilisatorflächenelemente 3, 4, 5, 15 und 16 belastet ist, jeweils symmetrisch von beiden Seiten gleichermaßen einer Belastung unterliegt.

Insofern erfolgt die Verbindung der Stabilisatorflächenelemente 3, 4, 5, 15 und 16 lediglich an ihren Kanten 24 über Verbindungslinien 22, wobei lediglich die Stabilisatorflächenelemente 3 und 18 gemeinsame Verbindungslinien 22 mit Verbindungslinien zwischen Pneuflächenelementen 1, 2, 6, 7, 8, 9, 10, 11, 12, 13, 14 und 17 untereinander aufweisen, während die übrigen Stabilisatorflächenelemente 4, 5, 15 und 16 die Verbindungslinien der Pneuflächenelemente schneiden und auf dieser Weise besonders stabilisierend wirken.

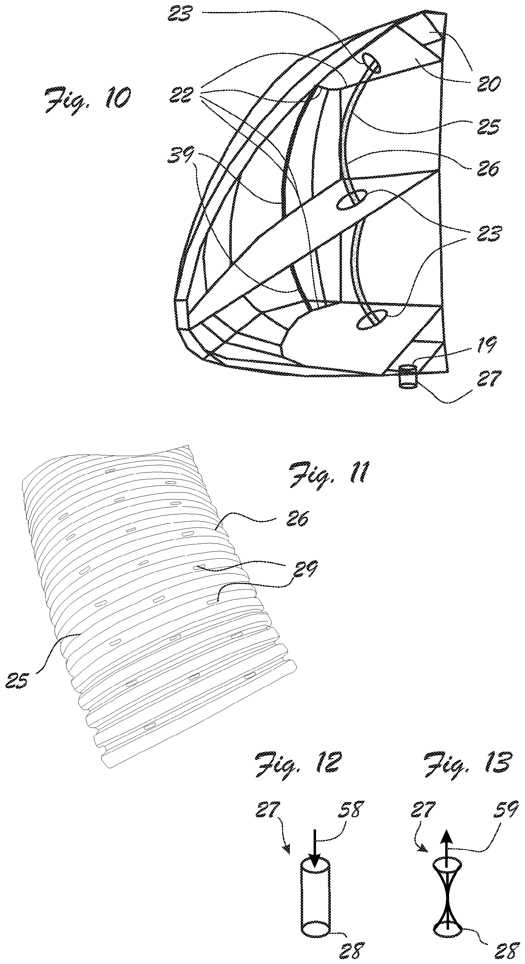

Das die Unterwand bildende Pneuflächenelement 14 weist jeweils eine Öffnung 19 an seiner tiefsten Stelle auf, welche für ein Auslassventil 27 genutzt wird, wie dieses in Figuren 10, 12 und 13 exemplarisch dargestellt ist.

Hierbei ist das Auslassventil 27 durch einen implodierbaren Schlauch 28 dargestellt, welcher bei Druck 58 offen ist, sodass etwaiger Schmutz, Kondensat, eingedrungenes Wasser oder sonstige Fremdkörper aus dem Textilpneu 40 herausfallen können. Wird der Textilpneu 40 entlüftet und es entsteht ein Sog 59, so implodiert der Schlauch 28 und das Auslassventil 27 verschließt sich eigenständig. Insofern ist keine separate Ansteuerung notwendig, weswegen das Auslassventil 27 als passivisch bezeichnet werden kann.

Auch kann der Textilpneu 40, wie in Figuren 10 und 11 dargestellt, einen Luftkanal 25 aufweisen, der durch einen Öffnungen 29 aufweisenden Luftschlauch 26 dargestellt sein kann. Durch einen derartigen Luftschlauch 26 bzw. Luftkanal 25 kann betriebssicher dafür gesorgt werden, dass Luft in bzw. aus etwaigen Kammern gelangt, welche durch den Stabilisator 20 innerhalb des Textilpneus 40 bedingt sind.

Hierbei ist es denkbar, dass der Luftkanal 25 frei innerhalb des Textilpneus 40 aufgehängt ist. Alternativ kann er jedoch gezielt beispielsweise zu einem Luftzugang 21, der in dem Textilpneu 40 vorgesehen ist und über welchem dieser be- und/oder entlüftet werden kann, verbunden sein.

Ebenso können in den Stabilisatorflächenelementen 3, 4, 5, 15, 16, 18, wie beispielhaft anhand der Stabilisatorflächenelemente 16, 3 und 5 in Fig. 10 dargestellt, Löcher 23 vorgesehen sein, welche für einen Luftdurchgang zwischen den vorstehend erwähnten Kammern sorgen können.

Je nach konkreter Ausführungsform kann der Luftkanal 25 bzw. der Luftschlauch 26 in derartigen Löchern 23 angeordnet sein. Ebenso kann der Luftkanal 25 an sich dicht in die Stabilisatorflächenelemente 3, 4, 5, 15, 16, 18 eingearbeitet sein, sodass bei den dann notwendigen Öffnungen in den Stabilisatorflächenelementen 3, 4, 5, 15, 16, 18 von Löchern 23 im Sinne einer unmittelbar durch sie möglichen Lüftung nicht mehr gesprochen werden kann.

Es versteht sich, dass in abweichenden Ausführungsformen auch mehrere Löcher 23 vorgesehen sein können, solange eine entsprechende Eigenstabilität der Stabilisatorflächenelemente 3, 4, 5, 15, 16, 18 nicht beeinträchtigt wird.

In der Verbindung zwischen den Pneuflächenelementen 6 und 10 bzw. 7 und 8 sind bei dem in Fig. 10 dargestellten Ausführungsbeispiel Reißverschlüsse 39 vorgesehen, die als Schnellentlüftung dienen und eine Schnellentlüftungsöffnung freigeben, wenn sie geöffnet werden. Hierdurch kann beispielsweise bei einem Unfall ein schnelles Entleeren des Textilpneus (40) ermöglicht werden. Hierbei ist der Reißverschluss 39 zwischen den Pneuflächenelementen 7 und 8 ohne Weiteres auch von unten zugänglich, während der obere Reißverschluss 39 zwischen den Pneuflächenelementen 6 und 10 bei weitgehend entleerte Unterseite des Pneus dann auch ohne weiteres zugänglich ist.

Darüber hinaus können der entsprechende Luftkanal 25 die Löcher 23 sowie das Auslassventil 27 auch bei den in Figuren 1 bis 9 dargestellten Textilpneus 40 sowie bei anderen Textilpneus vorteilhaft zur Anwendung kommen.

Der Textilpneu 40 wird über eine Haltevorrichtung 70, welche einen Träger 71 als feststehende Halteeinrichtung 72 aufweist, der bzw. die mit der Rahmenkonstruktion 32 des Nutzfahrzeugs 30 fest verbunden ist, an dem Fahrzeug 30 befestigt. Es versteht sich, dass in abweichenden Ausführungsformen der Träger 21 auch in der Rahmenkonstruktion des Fahrzeugs 30 selbst vorgesehen sein kann.

Damit die Heckseite 34 des Fahrzeugs 30 nach Bedarf freigegeben werden kann, ist der Textilpneu 40 über eine Schiebeführung 73 an der Halteeinrichtung 72 befestigt.

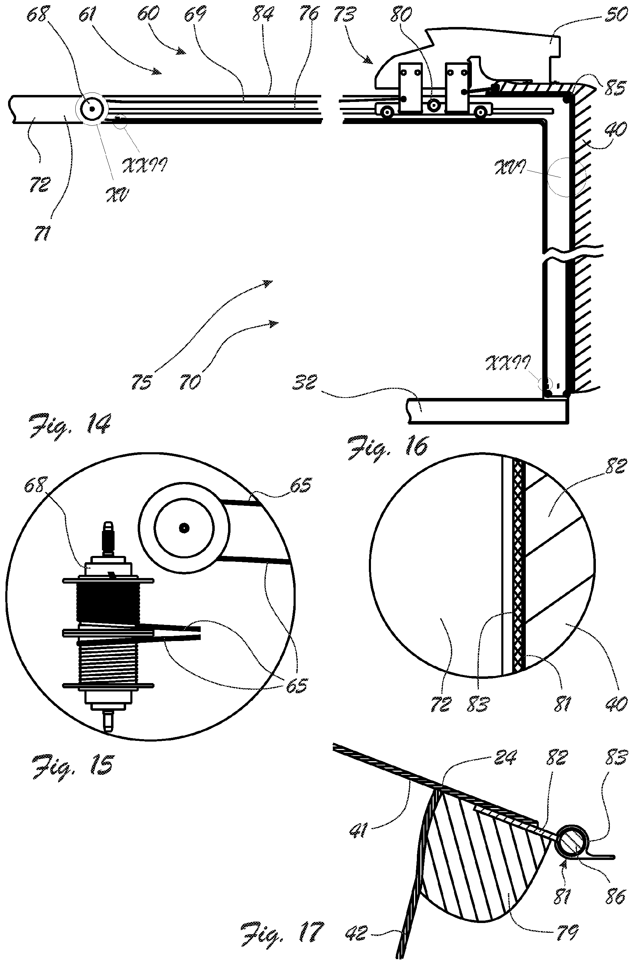

Bei dem in Figuren 14 bis 17 im Detail dargestellten Ausführungsbeispiel ist die Schiebeführung 73 als Kederführung 75 ausgestaltet und umfasst eine separate Führungsschiene 76 für einen Antriebsschlitten 80, über welche der Textilpneu 40 in der Kederführung bewegt wird. Neben der Führungsschiene 76 trägt der Träger 71 noch eine erste Kederschiene 83 und eine zweite Kederschiene 84 sowie eine gebogene Kederschiene 85, welche einen gleichmäßigen Übergang zwischen der ersten und der zweiten Kederschiene 83, 84 gewährleistet, wobei hierzu die Kederführung 75 im Bereich der gebogenen Kederschiene in Richtung der Krümmung geneigt ist, wie dieses beispielhaft in Figur 17 dargestellt ist. Hierbei das von der ersten Kederschiene 83 wegweisende Fähnchen parallel zur Fahrtrichtung des Fahrzeugs 30 ausgerichtet ist, wodurch sich der Winkel anhand der Ausrichtung dazugehörigen Kederfahne 82 der Keder 81 erkennen lässt.

Bei diesem Ausführungsbeispiel ist die schräge Ausrichtung der Kederschiene durchweg sowohl bei der gebogenen Kederschiene 85 als auch bei der ersten und zweiten Kederschiene 83, 84 zu finden, was konstruktiv einfach ist und, wenn der Textilpneu 40 unter Spannung steht, nur zu unwesentlichen Turbulenzen bzw. Spannungen führt.

Wie insbesondere aus Figur 17 ersichtlich, ist der Außenring 79 in die Rückwand 42 eingearbeitet und umfasst gemeinsam mit der Außenwand 41 die Kederfahne 82, welche ihrerseits in die Kederschiene 83, 84, 85 hineinreicht und eine Kederwulst 86 umgibt, durch welche dann ein betriebssicherer Verbleib der Kederfahne 82 in der Kederführung 75 gewährleistet ist.

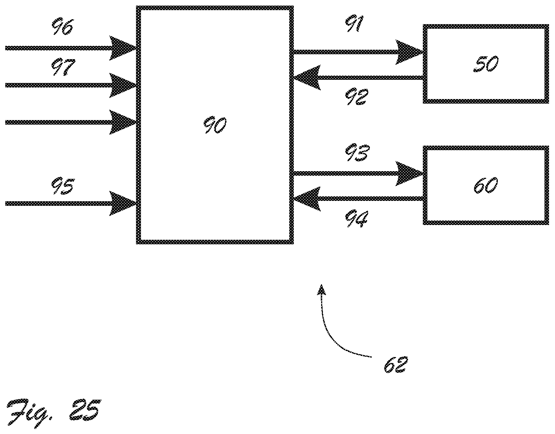

Als Positioniersystem 60 kommt ein Antrieb 61 mit einer Steuerung 62 (siehe Figur 25) zur Anwendung, wobei der Antrieb eine bidirektionale Wickeltrommel 68 aufweist, auf welcher bidirektional zwei Züge 69 aufgewickelt werden, wobei einer der Züge 69 ziehend an den Antriebsschlitten 80 angreift, während der andere der beide Züge 69 von der dem Antriebsschlitten abgewandten Seite des Textilpneus mit der Kederwulst 86 verbunden ist. Der Antriebsschlitten 80 ist darüber hinaus ebenfalls mit der Kederwulst 86 verbunden, sodass auf diese Weise ein geschlossener bzw. umlaufender Zug entsteht und der Textilpneu 40 über den Antrieb 61 in beide Richtungen der Kederschienen 83, 84, 85 entlang der auf dieser Weise gebildeten Schiebeführung 73 verschoben werden kann.

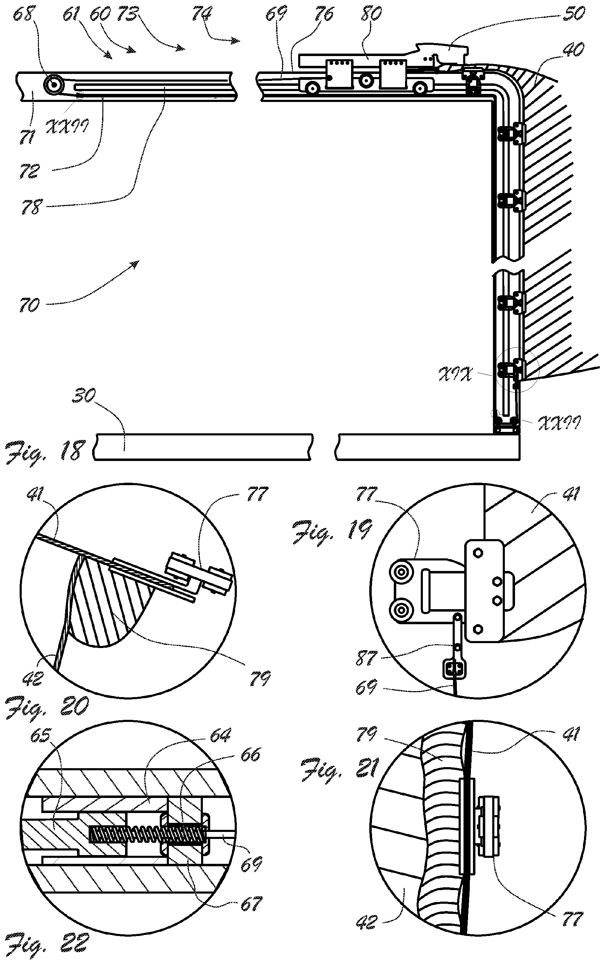

Bei der in Figuren 18 bis 21 dargestellten Schiebeführung 73 kommt statt einer Kederführung 75 eine Kulissenführung 74 zur Anwendung, bei welcher der Textilpneu mit mehreren Kulissenwagen 77 verbunden ist, wie dieses exemplarisch in Figuren 19 bis 21 im Detail dargestellt ist. Darüber hinaus dient bei dieser Anordnung der Träger 71 der Haltevorrichtung 70 unmittelbar als Führungsschiene für den Antriebsschlitten 80, wobei der Träger 71 darüber hinaus noch eine Führungsschiene 78 für die Kulissenwagen 77 aufweist, sodass diese entlang des Trägers 71 und mithin entlang der Schiebeführung 73 verschoben werden können.

Der Antrieb 81 des zugehörigen Positioniersystems 60 entspricht im Wesentlichen dem Antrieb 61 bzw. dem Positioniersystem 60 des Ausführungsbeispiels nach Figur 14, sodass diesbezüglich auf Wiederholungen verzichtet wird.

Auch die Befestigung der Kulissenwagen 77 an dem Textilpneu 40 ist verhältnismäßig ähnlich ausgestaltet, wobei hier Klammern die Außenwandung 41 umgreifen und der in die Rückwand 42 eingearbeitete Außenring 79 seinerseits gemeinsam mit der Außenwand 41 eine der Klammerbacken umschließt, was dementsprechend eine sehr stabile Verbindung gewährleistet.

Sowohl bei dem Ausführungsbeispiel nach Figur 14 als auch bei dem Ausführungsbeispiel nach Figur 15 ist in dem umlaufenden Gesamtzug, welcher insbesondere die Züge 69 umfasst ein selbstspannender Bowdenzug vorgesehen, der eine Stahlseele 65 mit einer Bowdenzughülle 64 umfasst und über eine Bowdenzugspannfeder 66 mittels eines wickeltrommelseitigen bzw. gegenseitigen Führungszylinders 67 in an sich bekannter Weise selbstspannend ausgebildet ist. Auf diese Weise kann der gesamte Zug mit einer gleichförmigen Spannkraft versehen werden.

Die Züge 69 sind bei dem Ausführungsbeispiel nach Figur 18 über eine Zugbefestigung 87 an den Kulissenwagen 77 bzw. an dem äußeren Kulissenwagen 77 befestigt.

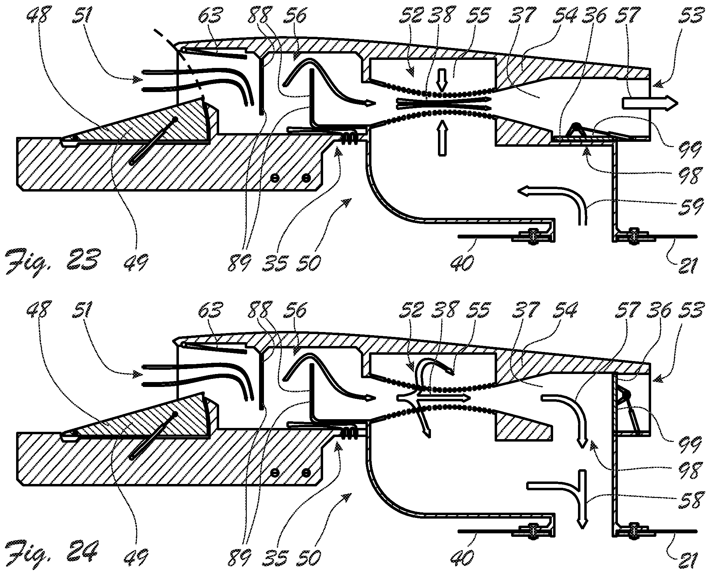

Zum Belüften und zum Entlüften weisen die hier vorgestellten Ausführungsbeispiele eine Be- und/oder Entlüftungseinrichtung 50 auf, welche in Figuren 23 und 24 im Detail dargestellt ist und einen Lufteinlass 51, eine Venturi-Düse 52 und einen Luftauslass 53 umfasst.

Der Lufteinlass 51, die Venturi-Düse 52 und der Luftauslass 53 sind bei diesem Ausführungsbeispiel in einem Düsenkörper 54 ausgebildet, der an dem Antriebsschlitten 80 vorgesehen ist, sodass die Be- und/oder Entlüftungseinrichtung 15 in einer definierten Position in Bezug auf den Textilpneu 40 verbleibt und an dessen Luftzugang 41 fest mit diesem verbunden sein kann.

In alternativen Ausführungsformen kann die Be- und/oder Entlüftungseinrichtung 50 an anderer Position an dem Fahrzeug 30 vorgesehen sein, um dann beispielsweise über einen Schlauch Luft zu dem Textilpneu 40 zu führen oder von diesem abzusaugen. Dann kann ggf. auch eine einzige Be- und/oder Entlüftungseinrichtung 50 ausreichen, um die linke und die rechte Seite des Textilpneus 40 zu be- und/oder entlüften.

Die Venturi-Düse 52 weist in an sich bekannter Weise eine Beschleunigungskammer 38 und eine Expansionskammer 37 auf, wobei die Expansionskammer 37 insbesondere auch einer Beruhigung des Luftstroms 57 dient, wenn dieser durch den Luftauslass 53 die Be- und/oder Entlüftungseinrichtung 50 verlässt, damit der Luftwiderstand des Fahrzeugs 30 nicht unnötig erhöht wird.

Darüber hinaus weist die Venturi-Düse 52 einen Ansaugraum 55 auf, der bei diesem Ausführungsbeispiel über eine perforierte Wandung mit der Beschleunigungskammer 38 verbunden ist, was über eine besonders lange Wegstrecke eine gute Strömungsführung des Luftstroms 57 durch die Venturi-Düse 52 hindurch gewährleistet. Es versteht sich, dass in abweichenden Ausführungsformen hier auch andere Ausgestaltungen von Venturi-Düsen denkbar sind.

In der Nähe des Luftauslasses 53 ist eine Staueinrichtung 99 vorgesehen, die über eine Steuerklappe 36 realisiert ist. Die Steuerklappe 36 kann den Luftauslass 53 zumindest teilweise blockieren, wodurch ein Rückstau der Luft durch die Venturi-Düse 52 erfolgt, welches dann dazu führt, dass die Luft von der Expansionskammer 37 in den Ansaugraum 55 gelangt, um auf diese Weise den Textilpneu 40 unter Druck 58 zu setzen. Auch ist hinter der Venturi-Düse 52 eine Öffnung 98 vorgesehen, welche den Luftstrom 57 bzw. die Expansionskammer 37 mit dem Ansaugraum 55 verbindet, sodass auch auf diese Weise Luft als Druck 58 dem Textilpneu 40 zur Verfügung gestellt werden kann.

Hierbei ist bei diesem Ausführungsbeispiel die Öffnung 98 ebenfalls durch die Steuerklappe 36 öffen- und verschließbar, was jedoch bei abweichenden Ausführungsbeispielen auch anders realisiert sein kann.

Dadurch, dass die Steuerklappe 36 sowohl die Öffnung 98 öffnet, und auch dadurch, dass die Steuerklappe 36 durch Schließen bzw. Verringern des Luftauslasses 53 die Staueinrichtung 99 stauend wirksam werden lässt, kann auf besonders effektive Weise Druck 58 für den Textilpneu 40 bereitgestellt werden. Selbiges gilt auch für einen Sog 49, indem die Steuerklappe 36 die Öffnung 98 schließt und den Luftauslass 53 freigibt, sodass unmittelbar der Venturi-Effekt wirksam werden kann.

Hinter dem Lufteinlass 51 und vor der Venturi-Düse 52 ist eine Filteranordnung 56 vorgesehen, welche bei diesem Ausführungsbeispiel durch Umlenkplatten 88 realisiert ist. Hierbei dienen die scharfen Richtungsumkehrungen an den Umlenkplatten 88 der Aussonderung von Schmutzpartikeln, Wasser oder ähnlicher Fremdkörper, wobei diese dann über einen kleinen Fehlluftstrom durch einen Schmutzabweiser 35, der bei diesem Ausführungsbeispiel lediglich durch Löcher dargestellt ist, ausgeschieden werden können.

Es versteht sich, dass in abweichenden Ausführungsbeispielen auch andere Filteranordnungen statt der Filteranordnung 56 zur Anwendung kommen können, wie beispielsweise netzartige Filter oder Zyklonenfilter, wobei die Filteranordnung 56 sich als baulich einfach und auch als unter unterschiedlichen Witterungsbedingungen sehr zuverlässig erwiesen hat.

Jede der Filteranordnungen wirkt darüber hinaus hinsichtlich der Strömung beruhigend, was insbesondere auch ergänzend durch eine Rückschlagklappe 63 gewährleistet wird, die am Lufteinlass 51 vorgesehen ist. Bei vorliegendem Ausführungseispiel ist die Rückschlagklappe 63 lediglich gewichtsbelastet. Sie kann in abweichenden Ausführungsformen auch federbelastet sein.

Die Rückschlagklappe gewährleistet darüber hinaus, dass bei einem Fahrzeugstillstand des Fahrzeugs 30 möglichst wenige Fremdkörper durch den Lufteinlass 51 gelangen.

Bei vorliegendem Ausführungsbeispiel sind die Umlenkplatten 88 mit einer Heizung 89 versehen, durch welche sowohl der Düsenkörper 54 als auch der Luftstrom 57 erwärmt werden können. Dieses dient der Vermeidung etwaiger Vereisung und auch der Minimierung etwaiger Kondensationseffekte. Es versteht sich, dass in abweichenden Ausführungsformen auch andere Arten einer Heizung vorgesehen sein können. Insbesondere kann auch an andere Stelle eine Heizung vorliegen. Ein Erwärmen des Luftstroms 57 und insbesondere der in den Textilpneu 40 gelangenen Luft hat insbesondere auch den Vorteil, dass im Textilpneu 40 selbst Vereisungen und Kondensate minimiert werden können.

An dem Lufteinlass 51 sind darüber hinaus Regulierungsmittel 59 vorgesehen, mittels derer der Öffnungsquerschnitt des Lufteinlasses 51 verändert werden kann.

Bei vorliegendem Ausführungsbeispiel umfassen die Regulierungsmittel 49 eine Anströmklappe 48, was eine besonders einfache bauliche Umsetzung der Regulierungsmittel 49 darstellt.

Darüber hinaus ist die Anströmklappe 48 angeschrägt, sodass ein konischer Lufteinlass 51 gewährleistet werden kann, wodurch sich des Weiteren Turbulenzen reduzieren und der Staudruck maximieren lassen.

Wird die Anströmklappe 48 angehoben, um den durch die Be- und/oder Entlüftungseinrichtung 50 streichenden Luftstrom 57 und insbesondere auch den in den Textilpneu 40 gelangenden Luftstrom zu reduzieren, so ermöglicht die konische Ausgestaltung der Anströmklappe 48, dass ein Teil des Luftstroms an dem Lufteinlass 51 vorbeigeführt wird, sodass eine unnötige Verminderung des Luftwiderstandes der Gesamtanordnung vermieden werden kann.

Es versteht sich, dass die vorstehenden Halteeinrichtung 72, der Antrieb 61 sowie der Antriebsschlitten 80 und die Be- und/oder Entlüftungseinrichtung 50 jeweils auf jeder Fahrzeugseite des Fahrzeugs 30 bzw. in Bezug auf sowohl den rechten als auch den linken Teil des Textilpneus entsprechend vorgesehen sind, was jedoch bei anderen Ausführungsformen nicht unbedingt der Fall sein muss.

Das bereits vorstehend kurz erläuterte Steuergerät 90 ist vorzugsweise als Mikrocontroller ausgebildet, wobei hier auch herkömmliche elektrische Schaltungen zur Anwendung kommen können. Hierbei kommuniziert das Steuergerät 90 mit der Be- und/oder Entlüftungseinrichtung 50, um das Textilpneu 40 zu befüllen oder zu entleeren (91). Die Be- und/oder Entlüftungseinrichtung 50 hingegen meldet ihren Zustand dahingehend, ob der Textilpneu 40 befüllt bzw. entleert ist (92).

In Bezug auf das Positioniersystem 60 kommuniziert das Steuergerät 90 mit dem Positioniersystem 60, dass dieses aus- bzw. eingefahren (93) werden soll. Seinen Zustand meldet das Positioniersystem 60 als ausgefahren zw. eingefahren (94) zurück.

Das Steuergerät 90 berücksichtig darüber hinaus hinsichtlich seiner Kommunikation mit der Be- und/oder Entlüftungseinrichtung 50 sowie dem Positioniersystem 60 die Geschwindigkeit 96 des Fahrzeugs 30 sowie den Luftdruck 97 im Textilpneu 40, um - je nach Erfordernissen - entsprechend eingreifen zu können.

Darüber hinaus ist ein manuelles Ein- oder Ausfahren 95 als Befehlseingang für das Steuergerät 90 vorgesehen.

Auch können weitere Steuerungsmöglichkeiten in dem Steuergerät 90 vorgesehen sein. Ebenso ist es denkbar, ergänzende Steuerungen dem Steuergerät 90 vor- oder nachzuschalten.

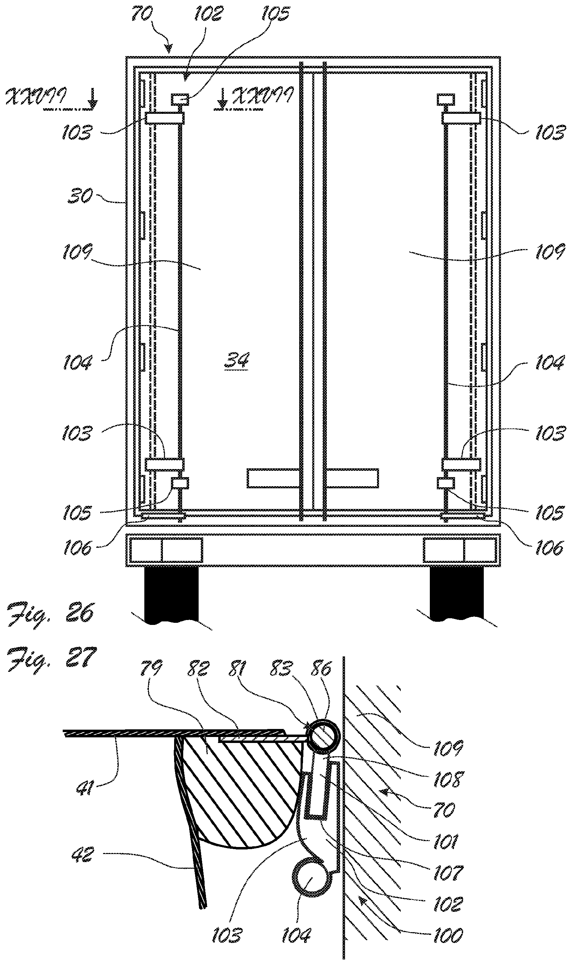

Wie in Fign. 26 und 27 dargestellt, kann der Textilpneu 40 über die Kederschienen 83, wenn diese eine erste Komponente 101 einer Spann- und Halteeinrichtung 100 der Haltevorrichtung 70 tragen, schnell und einfach am Heck 34 des Fahrzeugs 30 befestigt und von diesem gelöst werden.

Die zweite Komponente 102 der Spann- und Halteeinrichtung 100 kann dann am Heck 34 des Fahrzeugs 30 und insbesondere an dessen Türen 109 befestigt werden.

Bei vorliegendem Ausführungsbeispiel umfasst die erste Komponente 101 eine Nut 107 an der Kederschiene 83, während die zweite Komponente 102 eine zugehörige Feder 108 umfasst, welche an einem Spann- und Haltehebel 103 vorgesehen ist. Mehrere die Spann- und Haltehebel 103 sitzen auf einer Spannwelle 104, welche mittels Befestigungen 105 an der Tür 109 drehbar befestigt ist und einen Betätigungshebel 106 in der Nähe der Unterseite des Fahrzeugs 30 trägt.

Entsprechende Anordnungen finden sich auf beiden Türen 109 spiegelbildlich, so dass die Kederschienen 83, in welchem der Textilpneu 40 über die Keder 81 gehalten ist, lediglich in die Nut 107 eingelegt und der Betätigungshebel 106 derart umgelegt werden bracht, dass der Spann- und Haltehebel 103 an der Tür zur Anlage kommt. Dieses führt aufgrund der Gesamtgeometrie dann zu einem Spannen des Textilpneus.

Es versteht sich, dass ggf. auch der Spannhebel an dem Textilpneu 40 bzw. textilpneuseitig der zweikomponentigen Spann- und Halteeinrichtung 100 vorgesehen sein kann. Dann reicht eine an sich unbeweglich an dem Fahrzeug 30 befestigte Komponente der zweikomponentigen Spann- und Halteeinrichtung 100 aus.

**Bezugszeichenliste:**

| | | | |
|---|---|---|---|
| 1 | Pneuflächenelement für Rückwand 42 | 32 | Rahmenkonstruktion des Nutzfahrzeugs 30 |
| 2 | Pneuflächenelement für Rückwand 42 | 33 | Vorderseite des Fahrzeugs 30 |
| | | 34 | Heckseite des Fahrzeugs 30 |
| 3 | Stabilisatorflächenelement | 35 | Schmutzabweiser |
| 4 | Stabilisatorflächenelement | 36 | Steuerklappe |
| 5 | Stabilisatorflächenelement | 37 | Expansionskammer |
| 6 | Pneuflächenelement für Seitenwand | 38 | Beschleunigungskammer |
| 7 | Pneuflächenelement für Seitenwand | 39 | Reißverschluss |
| 8 | Pneuflächenelement für Seitenwand | 40 | Textilpneu |
| 9 | Pneuflächenelement für Seitenwand | 41 | Außenwand |
| 10 | Pneuflächenelement für Seitenwand | 42 | Rückwand |
| 11 | Pneuflächenelement für Seitenwand | 43 | Oberseite |
| 12 | Pneuflächenelement für Oberwand | 44 | Unterseite |
| 13 | Pneuflächenelement für Oberwand | 45 | horizontale Seite |
| 14 | Pneuflächenelement für Unterwand | 46 | Heckseite |
| 15 | Stabilisatorflächenelement | 47 | Fahrzeugseite |
| 16 | Stabilisatorflächenelement | 48 | Anströmklappe |
| 17 | Pneuflächenelement für Heckseite 46 | 49 | Regulierungsmittel |
| 18 | Stabilisatorflächenelement als Zentralelement | 50 | Be- und/oder Entlüftungseinrichtung |
| | | 51 | Lufteinlass |
| 19 | Öffnung in Pneuflächenelement 14 | 52 | Venturi-Düse |
| 20 | Stabilisator | 53 | Luftauslass |
| 21 | Luftzugang | 54 | Düsenkörper |
| 22 | Verbindungslinie | 55 | Ansaugraum |
| 23 | Loch | 56 | Filteranordnung |
| 24 | Kante | 57 | Luftstrom |
| 25 | Luftkanal | 58 | Druck |
| 26 | Luftschlauch | 59 | Sog |
| 27 | Auslassventil | 60 | Positioniersystem |
| 28 | implodierbarer Schlauch | 61 | Antrieb |
| 29 | Öffnungen des Luftkanals 25 | 62 | Steuerung |
| 30 | Fahrzeug | 63 | Rückschlagklappe |
| 31 | Fahrzeugkoffer | 64 | Bowdenzughülle |
| 65 | Stahlseele | 89 | Heizung |
| 66 | Bowdenzugspannfeder | 90 | Steuergerät/Mikrocontroller |
| 67 | Führungszylinder trommelseitig/gegenseitig | 91 | Textilpneu 40 befüllen/entleeren |
| | | 92 | Textilpneu 40 befüllt/entleert |
| 68 | bidirektionale Wickeltrommel | 93 | Positioniersystem 60 ausfahren/einfahren |
| 69 | Zug | | |
| 70 | Haltevorrichtung | 94 | Positioniersystem 60 ausgefahren/eingefahren |
| 71 | Träger | | |
| 72 | Halteeinrichtung | 95 | Manuell ein-/ausfahren |
| 73 | Schiebeführung | 96 | Geschwindigkeit |
| 74 | Kulissenführung | 97 | Luftdruck im Textilpneu 40 |
| 75 | Kederführung | 98 | Öffnung |
| 76 | Führungsschiene für Antriebsschlitten 80 | 99 | Staueinrichtung |
| | | R | rechter Teil des Textilpneus 40 |
| 77 | Kulissenwagen | L | linker Teil des Textilpneus 40 |
| 78 | Führungsschiene für Kulissenwagen 77 | 100 | Spann- und Halteeinrichtung |
| | | 101 | erste Komponente der Spann- und Halteeinrichtung 100 |
| 79 | Außenring | | |
| 80 | Antriebsschlitten | 102 | zweite Komponente der Spann- und Halteeinrichtung 100 |
| 81 | Keder | | |
| 82 | Kederfahne | 103 | Spann- und Haltehebel |
| 83 | erste Kederschiene | 104 | Spannwelle |
| 84 | zweite Kederschiene | 105 | Befestigung |
| 85 | gebogene Kederschiene | 106 | Betätigungshebel |
| 86 | Kederwulst | 107 | Nut |
| 87 | Zugbefestigung | 108 | Feder |
| 88 | Umlenkplatte | 109 | Tür des Fahrzeugs 30 |

## Patentansprüche

1. Textilpneu (40) zum Senken des Strömungswiderstandes von Fahrzeugen (30) mit einer Fahrzeugseite (47) und einer Heckseite (46), wobei an der Fahrzeugseite (47) eine Haltevorrichtung (70) zur Befestigung des Textilpneus (40) an einem Fahrzeug (30) angeordnet ist und der Textilpneu (40) einen befüllten Zustand und einen entleerten Zustand aufweist, **dadurch gekennzeichnet, dass** im Inneren der Textilpneus (40) ein Form haltender aber nach innen nachgiebiger, zumindest ein sich mit einer zur Oberfläche des Textilpneus (40) senkrechten Komponente erstreckendes Stabilisatorflächenelement (3, 4, 5, 15, 16, 18) umfassender Stabilisator (20) vorgesehen ist, welches über eine Verbindungslinie (22) mit dem Textilpneu (40) verbunden ist.

2. Textilpneu (40) nach Anspruch 1, **dadurch gekennzeichnet, dass** das wenigstens eine Stabilisatorflächenelement (3, 4, 5, 15, 16, 18) wenigstens ein Loch (23) aufweist.

3. Textilpneu (40) nach Anspruch 1 oder 2, **dadurch gekennzeichnet, dass** die Verbindungslinie (22) im Inneren des Textilpneus (40) liegt.

4. Textilpneu (40) nach einem der Ansprüche 1 bis 3, **dadurch gekennzeichnet, dass** das wenigstens eine Stabilisatorflächenelement (3, 4, 5, 15, 16, 18) textil bzw. senkrecht zu seiner Fläche beweglich ausgebildet ist.

5. Textilpneu (40) nach einem der Ansprüche 1 bis 2, **dadurch gekennzeichnet, dass** der Textilpneu (40) sowohl eine Rückwand (41) als auch eine Außenwand (42) mit einer Oberseite (43), einer Unterseite (44), zwei horizontalen Seiten (45) und der Heckseite (46) aufweist

6. Textilpneu (40) nach einem Anspruch 5, **dadurch gekennzeichnet, dass** das wenigstens eine Stabilisatorflächenelement (3, 4, 5, 15, 16, 18) an der Verbindungslinie (22) und/oder mit einer senkrechten Komponente an die Rückwand (42) und/oder an die Außenwand (41) des Textilpneus (40) stößt.

7. Textilpneu (40) nach einem Anspruch 5 oder 6, **dadurch gekennzeichnet, dass** wenigstens ein Pneuflächenelement (1, 2) die Rückwand (42) und sowie wenigstens ein weiteres Pneuflächenelement (6, 7, 8, 9, 10, 11, 12, 13, 14, 17) die Außenwand (41) darstellen.

8. Textilpneu (40) nach einem Anspruch 7, **dadurch gekennzeichnet, dass** das wenigstens eine Stabilisatorflächenelement (3, 4, 5, 15, 16, 18) mit zwei der die Rückwand (42) oder die Außenwand (41) darstellenden Pneuflächenelementen (1,2, 6, 7, 8, 9, 10, 11, 12, 13, 14, 17) und/oder, wenn die Außenwand (41) durch wenigstens zwei Pneuflächenelemente (6, 7, 8, 9, 10, 11, 12, 13, 14, 17) dargestellt ist, mit diesen beiden Pneuflächenelementen (6, 7, 8, 9, 10, 11, 12, 13, 14, 17) verbunden ist.

9. Textilpneu (40) nach einem Anspruch 7 oder 8, **dadurch gekennzeichnet, dass** das wenigstens eine Stabilisatorflächenelement (3, 4, 5, 15, 16, 18) zumindest mit der Rückwand (42) sowie an wenigstens zwei seiner Kanten (24) mit der Außenwand (41) verbunden ist.

10. Textilpneu (40) nach einem der Ansprüche 1 bis 9, **dadurch gekennzeichnet, dass** das wenigstens eine Stabilisatorflächenelement (3, 4, 5, 15, 16, 18) im befüllten Zustand unter stetiger Spannung steht und insbesondere keine Knicke aufweist.

11. Textilpneu (40) nach einem der Ansprüche 1 bis 10, **dadurch gekennzeichnet, dass** das wenigstens eine Stabilisatorflächenelement (3, 4, 5, 15, 16, 18) lediglich an seinen Kanten (24) mit anderen Stabilisatorflächenelementen (3, 4, 5, 15, 16, 18) oder mit Pneuflächenelementen (1,2, 6, 7, 8, 9, 10, 11, 12, 13, 14, 17) verbunden ist.

12. Textilpneu (40) nach einem der Ansprüche 1 bis 11, **dadurch gekennzeichnet, dass** das wenigstens eine Stabilisatorflächenelement (3, 4, 5, 15, 16, 18), beispielsweise das Stabilisatorflächenelement (18) als Zentralelement, das Innere des Textilpneus (40) teilt.

13. Textilpneu (40) nach einem der Ansprüche 1 bis 12, **dadurch gekennzeichnet, dass** im Inneren des Textilpneus (40) wenigstens ein Öffnungen (29) in den Textilpneu (40) hinein aufweisender Luftkanal (25) angeordnet ist.

14. Textilpneu (40) nach Anspruch 13, **dadurch gekennzeichnet, dass** der Luftkanal (25) als, vorzugsweise eigenstabiler und/oder perforierter, Luftschlauch (26) ausgebildet ist.

15. Textilpneu (40) nach einem der Ansprüche 1 bis 14, **gekennzeichnet durch** eine Heizung (89).

16. Textilpneu (40) nach einem der Ansprüche 1 bis 15, **dadurch gekennzeichnet, dass** der Textilpneu (40), und insbesondere dessen Rückwand (42), unteilbar ausgebildet ist.

17. Textilpneu (40) nach einem der Ansprüche 1 bis 15, **dadurch gekennzeichnet, dass** der Textilpneu (40), und insbesondere dessen Rückwand (42), teilbar ausgebildet ist.

18. Textilpneu (40) nach Anspruch 17, **dadurch gekennzeichnet, dass** an der Teilung des Textilpneus (40) ein öffen- und schließbares Verbindungselement angeordnet ist.

## Claims

1. Inflatable textile bag (40) for lowering the drag of vehicles (30), having a vehicle side (47) and a rear side (46), wherein a holding apparatus (70) for fastening the inflatable textile bag (40) to a vehicle (30) is disposed on the vehicle (47), and the inflatable textile bag (40) has a filled state and an emptied state, wherein inside the textile bag (40) wherein a stabilizer (20), which keeps its shape but is resilient inward, and comprises at least one stabilizer surface element (3, 4, 5, 15, 16, 18) having a component that extends perpendicular to the surface of the inflatable textile bag (40) (40), which element is connected with the inflatable textile bag (40) by way of a connection line (22).

2. Inflatable textile bag (40) according to claim 1, wherein at least one stabilizer surface element (3, 4, 5, 15, 16, 18) has at least one hole (23).

3. Inflatable textile bag (40) according to claim 1 or 2 wherein the connection line (22) lies in the interior of the inflatable textile bag (40).

4. Inflatable textile bag (40) according to claim 1 to 3 , wherein at least one stabilizer surface element (3, 4, 5, 15, 16, 18) is configured to be textile or movable perpendicular to its surface.

5. Inflatable textile bag (40) according to claim 1 to 2, wherein the inflatable textile bag (40) has not only a rear wall (41) but also an outer wall (42) having a top side (43), a bottom side (44), two horizontal sides (45), and the rear side (46).

6. Inflatable textile bag (40) according to claim 5, wherein at least one stabilizer surface element (3, 4, 5, 15, 16, 18) contacts the rear wall (42) and/or the outer wall (41) of the inflatable textile bag (40) at the connection line (22) and/or with a perpendicular component.

7. Inflatable textile bag (40) according to claim 5 or 6, wherein at least one inflatable bag surface element (1, 2), the rear wall (42), and at least one further inflatable bag surface element (6, 7, 8, 9, 10, 11, 12, 13, 14, 17) represent the outer wall (41).

8. Inflatable textile bag (40) according to claim 7, wherein the at least one stabilizer surface element (3, 4, 5, 15, 16, 18) is connected with two of the inflatable bag surface elements (1, 2, 6, 7, 8, 9, 10, 11, 12, 13, 14, 17) that represent the rear wall (42) or the outer wall (41) and/or, if the outer wall (41) is represented by at least two surface elements (6, 7, 8, 9, 10, 11, 12, 13, 14, 17), is connected with these two surface elements (6, 7, 8, 9, 10, 11, 12, 13, 14, 17).

9. Inflatable textile bag (40) according to claim 7 or 8, wherein at least one stabilizer surface element (3, 4, 5, 15, 16, 18) is connected at least with the rear wall (42), as well as with the outer wall (41) on at least two of its edges (24).

10. Inflatable textile bag (40) according to claim 1 to 9, wherein at least one stabilizer surface element (3, 4, 5, 15, 16, 18) is under constant tension in the filled state and, in particular, has no kinks.

11. Inflatable textile bag (40) according to claim 1 to 10, wherein at least one stabilizer surface element (3, 4, 5, 15, 16, 18) is connected with other stabilizer surface elements (3, 4, S, 15, 16, 18) or with inflatable bag surface elements (1, 2, 6, 8, 9, 10, 11, 12, 13, 14, 17) only at its edges (24).

12. Inflatable textile bag (40) according to claim 1 to 11, wherein at least one stabilizer surface element (3, 4, 5, 15, 16, 18), for example the stabilizer surface element (18) as a central element, divides the interior of the inflatable textile bag (40).

13. Inflatable textile bag (40) according to claim 1 to 12, wherein in the inside of the textile bag (40) at least one opening (29) is arranged on an air duct (25) in the interior of the textile bag (40).

14. Inflatable textile bag (40) according to claim 13, wherein the air channel (25) is configured as a preferably inherently stable and/or perforated air hose (26).

15. Inflatable textile bag (40) according to claim 1 to 14, **characterized by** a heater (89).

16. Inflatable textile bag (40) according to claim 1 to 15, **characterized in that** the textile bag (40), and in particular its rear wall (42), is designed to be indivisible.

17. Inflatable textile bag (40) according to claims 1 to 15, **characterized in that** the textile bag (40), and in particular its rear wall (42), is designed to be divisible.

18. Inflatable textile bag (40) according to claim 17, **characterized in that** an openable and closable connecting element is arranged on the division of the textile bag (40).

## Revendications

1. Sac textile gonflable (40) destiné à réduire la résistance d'écoulement de véhicules (30), comportant un côté véhicule (47) et un côté arrière (46), dans lequel un dispositif de maintien (70) destiné à fixer le sac textile gonflable (40) à un véhicule (30) est disposé sur le véhicule (47), et le sac textile gonflable (40) présente un état rempli et un état vidé, **caractérisé en ce qu'**à l'intérieur du sac textile (40), un stabilisateur (20), qui conserve sa forme mais est élastique vers l'intérieur, et comprend au moins un élément de surface stabilisateur (3, 4, 5, 15, 16, 18) ayant un composant qui s'étend perpendiculairement à la surface du sac textile gonflable (40), lequel est relié au sac textile gonflable (40) par l'intermédiaire d'une ligne de liaison (22).

2. Sac textile gonflable (40) selon la revendication 1, **caractérisé en ce qu'**au moins un élément de surface stabilisateur (3, 4, 5, 15, 16, 18) présente au moins un trou (23).

3. Sac textile gonflable (40) selon la revendication 1 ou 2, **caractérisé en ce que** la ligne de liaison (22) se trouve à l'intérieur du sac textile gonflable (40).

4. Sac textile gonflable (40) selon une des revendications 1 à 3, **caractérisé en ce qu'**au moins un élément de surface stabilisateur (3, 4, 5, 15, 16, 18) est configuré pour être textile ou mobile perpendiculairement à sa surface.

5. Sac textile gonflable (40) selon une des revendications 1 à 2, dans lequel le sac textile gonflable (40) présente non seulement une paroi arrière (41) mais aussi une paroi extérieure (42) ayant une face supérieure (43), une face inférieure (44), deux faces horizontales (45) et la face arrière (46).

6. Sac textile gonflable (40) selon la revendication 5, **caractérisé en ce qu'**au moins un élément de surface stabilisateur (3, 4, 5, 15, 16, 18) est en contact avec la paroi arrière (42) et/ou la paroi extérieure (41) du sac textile gonflable (40) au niveau de la ligne de liaison (22) et/ou avec une composante perpendiculaire.

7. Sac textile gonflable (40) selon la revendication 5 ou 6, **caractérisé en ce qu'**au moins un élément de surface de sac gonflable (1, 2), la paroi arrière (42) et au moins un autre élément de surface de sac gonflable (6, 7, 8, 9, 10, 11, 12, 13, 14, 17) représentent la paroi extérieure (41).

8. Sac textile gonflable (40) selon la revendication 7, **caractérisé en ce qu'**au moins un élément de surface stabilisateur (3, 4, 5, 15, 16, 18) est relié à deux des éléments de surface du sac gonflable (1, 2, 6, 7, 8, 9, 10, 11, 12, 13, 14), 17) qui représentent la paroi arrière (42) ou la paroi extérieure (41) et/ou, si la paroi extérieure (41) est représentée par au moins deux éléments de surface (6, 7, 8, 9, 10, 11, 12, 13, 14, 17), est reliée à ces deux éléments de surface (6, 7, 8, 9, 10, 11, 12, 13, 14, 17).

9. Sac textile gonflable (40) selon la revendication 7 ou 8, **caractérisé en ce qu'**au moins un élément de surface stabilisateur (3, 4, 5, 15, 16, 18) est relié au moins à la paroi arrière (42), ainsi qu'à la paroi extérieure (41) sur au moins deux de ses bords (24).

10. Sac textile gonflable (40) selon les revendications 1 à 9, caractérie en ce quau moins un élément de surface stabilisateur (3, 4, 5, 15, 16, 18) est sous tension constante à l'état rempli et en particulier, particulier n'a pas de coudes.

11. Sac textile gonflable (40) selon la revendication 1 à 10, **caractérisé en ce qu'**au moins un élément de surface stabilisateur (3, 4, 5, 15, 16, 18) est relié à d'autres éléments de surface stabilisateurs (3, 4, S, 15, 16, 18) ou à des éléments de surface de sac gonflable (1, 2, 6, 8, 9, 10, 11, 12, 13, 14, 17) uniquement sur ses bords (24).

12. Sac textile gonflable (40) selon les revendications 1 à 11, **caractérisé en ce qu'**au moins un élément de surface stabilisateur (3, 4, 5, 15, 16, 18), par exemple l'élément de surface stabilisateur (18) en tant qu'élément central, divise l'intérieur du sac textile gonflable (40).

13. Sac textile gonflable (40) selon les revendications 1 à 12, dans lequel à l'intérieur du sac textile (40) au moins une ouverture (29) est disposée sur un conduit d'air (25) à l'intérieur du sac textile (40).

14. Sac textile gonflable (40) selon la revendication 13, **caractérisé en ce que** dans lequel le que le conduit d'air (25) est formé comme un tuyau d'air (26), de préférence intrinsèquement stable et/ou perforé.

15. Sac textile gonflable (40) selon la revendication 1 à 14, **caractérisé par** un élément chauffant (89).

16. Sac textile gonflable (40) selon la revendication 1 à 15, **caractérisé en ce que** le sac textile (40), et notamment sa paroi arrière (42), est conçu pour être indivisible.

17. Sac textile gonflable (40) selon la revendication 1 à 15, **caractérisé en ce que** le sac textile (40), et notamment sa paroi arrière (42), est conçu pour être divisible.

18. Sac textile gonflable (40) selon la revendication 17, **caractérisé en ce qu'**un élément de connexion ouvrable et refermable est disposé sur la division du sac textile (40).
